# EUROPEAN PATENT APPLICATION

(11) **EP 4 336 582 A2**
(43) Date of publication of application: **13.03.2024**
(21) Application number: 23191391.4
(22) Date of filing: 14.08.2023
(51) Int. Cl.: H01M 4/13, H01M 4/139, H01M 4/62

(54) **CROSSLINKED BINDER-CONTAINING ELECTRODES FOR ELECTROCHEMICAL ENERGY STORAGE DEVICES**

(30) Priority: 16.08.2022 US 202263398252 P
(71) Applicant: Solaredge Technologies Ltd., Herzeliya 4673335 (IL)
(72) Inventor: BURSHTAIN, Doron, 4673335 Herzeliya (IL); SHAPIRO, Leora, 4673335 Herzeliya (IL); DAMATOV, Yaniv, 4673335 Herzeliya (IL); ABTEW, Ester, 4673335 Herzeliya (IL)
(74) Representative: V.O.

(57) **Abstract**

There is provided an electrode for an electrochemical energy storage device comprising an electrode active material and a crosslinked binder. The crosslinked binder includes a polyelectrolyte composed of monomer units, wherein at least a portion of the monomer units has at least one carboxyl group per unit, and a crosslinking agent, wherein the polyelectrolyte is crosslinked by the crosslinking agent. The crosslinking agent is selected from a polyphosphate and a combination of ethylenedinitrilotetraacetic acid (EDTA) with sodium ions. The electrode active material is held together by the crosslinked binder. Further provided are methods for forming the electrode, electrode slurries comprising the crosslinked binder, and electrochemical energy storage devices that employ the electrode as an anode, a cathode, or both.

## Description

### BACKGROUND

The present disclosure relates to electrodes comprising an electrode active material and a crosslinked binder, as well as methods for production of the same.

Secondary batteries are rechargeable and capable of storing energy, as well as repeated charging and discharging. Existing commercially available secondary batteries include, for example, nickel-cadmium batteries, nickel-hydride batteries, zinc batteries, and lithium batteries, wherein lithium batteries are characterized by a low self-discharge rate and a high energy density.

Lithium secondary batteries (also termed herein "lithium ion"- or "Li-ion" batteries, and abbreviated as "LIB") are composed of two electrodes (a cathode and an anode) disposed between two current collectors and a separator which is disposed between the electrodes and is configured to electrically isolate the electrodes from each other, while providing ionic connectivity therebetween. The cathode of the secondary lithium-ion battery typically contains a lithium-based oxide or lithium-based phosphate as an active material, while the anode active material is generally selected from one or more of a carbon-based material and a silicon-based material. The separator is typically filled by an ion-conducting electrolyte containing a dissociated lithium conducting salt. Lithium ions migrate between the electrodes of lithium-ion batteries during charging and discharging and are intercalated into the respective active materials.

Typically, the electrodes of lithium secondary batteries are formed by applying an electrode composition being in a form of an electrode slurry comprising an anode or cathode active material dispersed in a suitable solvent to a current collector, and then evaporating the solvent and drying the active material.

The electrodes may further contain one or more inactive materials, which, *inter alia,* may assist in the coating process, improve electrode integrity during prolonged battery cycling, and enhance electrical and/or ionic conductivity of the electrode. For example, a binder is typically required to ensure good cohesion of the electrode particles and sufficient adhesion to the current collector.

### BRIEF SUMMARY OF THE INVENTION

The following presents a simplified summary of disclosed aspects in order to provide a basic understanding of these aspects. This summary is not an extensive overview of the aspects. It is not intended to identify key or critical elements or to delineate the scope of the disclosure.

Aspects of the disclosure relate to a crosslinked binder for use in one or more electrodes of an electrochemical energy storage device. The crosslinked binder may enhance adhesion of the electrode active material to the current collector, increase cohesion between the particles of the active material, diminish physical and chemical deterioration of the electrode and improve electrode properties, e.g., specific capacity and Li-ion conductivity. Further aspects relate to an electrode for an electrochemical energy storage device, the electrode comprising said crosslinked binder. In further aspects, there is provided an electrode slurry comprising the crosslinked binder and a method of forming an electrode comprising the crosslinked binder. Further aspects relate to a secondary lithium battery that includes an anode comprising the crosslinked binder, or a cathode comprising the crosslinked binder, or both.

The crosslinked binder comprises a polyelectrolyte and a crosslinking agent, wherein the polyelectrolyte is crosslinked by the crosslinking agent. The polyelectrolyte is composed of monomer units, wherein at least a portion of the monomer units has at least one carboxyl group per unit. The crosslinked binder, according to some aspects and embodiments of the present invention, comprises the polyelectrolyte and a polyphosphate, wherein the polyelectrolyte is crosslinked by the polyphosphate. According to further aspects and embodiments of the invention, the crosslinked binder comprises the polyelectrolyte and a combination of ethylenedinitrilotetraacetic acid (EDTA) and sodium ions, wherein the polyelectrolyte is crosslinked by the EDTA and sodium ions.

The electrode for an electrochemical energy storage device comprises an electrode active material; and the crosslinked binder, wherein the electrode active material is held together by the crosslinked binder.

The electrode slurry for an electrochemical energy storage device comprises the electrode active material; the crosslinked binder; and one or more solvents.

The method of forming the electrode for an electrochemical energy storage device comprises heating a mixture comprising the crosslinked binder and the electrode active material to a predefined temperature and/or applying a pressure to the mixture.

The secondary lithium battery comprises a case, a positive terminal, a cathode, a separator, an electrolyte, a negative terminal and an anode, wherein at least one of the cathode and the anode comprises an electrode active material and the crosslinked binder, wherein the electrode active material is held together by the crosslinked binder.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:
Figure 1a shows a Fourier-transform infrared spectroscopy (FTIR) spectrum of poly(acrylic acid) (PAA);
Figure 1b shows a FTIR spectrum of disodium-EDTA (Na-EDTA);
Figure 1c shows a FTIR spectrum of a mixture of poly(acrylic acid) and 10% wt. disodium-EDTA (PAA/Na-EDTA 10%);
Figure 1d shows a FTIR spectrum of a mixture of poly(acrylic acid) and 30% wt. disodium-EDTA (PAA/Na-EDTA 30%);
Figure 1e shows a FTIR spectrum of a mixture of poly(acrylic acid) and 50% wt. disodium-EDTA (PAA/Na-EDTA 50%);
Figure 2 shows FTIR spectra of PAA, PAA/Na-EDTA 10%, PAA/Na-EDTA 30%, and PAA/Na-EDTA 50% on the same graph;
Figure 3 shows the chemical structure of PAA/Na-EDTA;
Figure 4a shows a FTIR spectrum of poly(acrylic acid) (PAA);
Figure 4b shows a FTIR spectrum of tetrasodium-pyrophosphate (Na-pyrophosphate);
Figure 4c shows FTIR spectra of a mixture of poly(acrylic acid) and 10% wt. tetrasodium-pyrophosphate (PAA/Na-pyrophosphate 10%), and a mixture of poly(acrylic acid) and 30% wt. tetrasodium-pyrophosphate (PAA/Na-pyrophosphate 30%); and
Figure 5 shows a FTIR spectrum of poly(acrylic acid) and 5% wt. tetrasodium-pyrophosphate (PAA/Na-pyrophosphate 5%).

### DETAILED DESCRIPTION OF THE INVENTION

Unless defined otherwise, all technical and scientific terms used herein have the same meaning as commonly understood by one of ordinary skill in the art to which this disclosure belongs.

Electrodes for use in electrochemical energy storage devices are typically composed of an electrode active material and a binder. The electrodes may include an electrode active material that changes shape, size, and/or volume during cycling or aging. Said changes may lead to the detachment of the electrode active material from the current collector and/or formation of cracks in the solid electrolyte interface (SEI). Suitable binders may control particle expansion and shape changes, as well as keep the active particles together upon lithiation, thus preserving the electrode integrity and increasing the cycle life of the device. The binder may also affect formation of the solid electrolyte interface (SEI) - a protective layer that is formed on the anode surface during the first charging of the battery upon the reaction of the anode active material with the electrolyte.

Traditionally, polyvinylidene difluoride (PVDF) has been used as a binder. However, PVDF is not soluble in water and, as such, requires the use of toxic organic solvents such as, but not limited to, N-methyl pyrrolidone (NMP) for the electrode preparation. There is ongoing research directed to finding alternative suitable binders, which would preferably be water-soluble, thereby allowing the use of water as electrode preparation medium, without compromising electrode active material adhesion to the current collector offered by PVDF and the long-term electrode stability. Poly(acrylic acid) (PAA) and carboxy methyl cellulose (CMC) have been proposed as alternatives to the PVDF binder, for example, in silicon-based anodes.

In order to enhance stabilizing properties of the binder, crosslinked binders may be used. A crosslinked binder may have a three-dimensional network of interconnected polymer chains, thereby providing a continuous polymeric matrix for supporting the electrode active material particles. Multiple crosslinking points may more easily alleviate deformation stresses induced by the electrode active material particles during cell cycling than non-crosslinked polymer chains.

In accordance with the various aspects and embodiments of the present invention, polyelectrolytes, such as, but not limited to, PAA or CMC, which are crosslinked by a polyphosphate are configured to form multiple 3D networks that may enhance lithium-ion transport within the electrode. The electrodes comprising the crosslinked binder according to the principles of the present invention may therefore reduce resistance and provide long-term stability, higher power density, and longer cycle life of the secondary lithium battery. The crosslinked binder may further improve stability of the electrode composition even before it is applied onto the current collector and/or cured, e.g., during preparation of the electrode slurry. PAA or CMC may also be crosslinked by EDTA and sodium ions, wherein the addition of sodium ions may enhance the crosslinking efficiency of EDTA, thereby increasing stability of the electrode composition slurry, as well as preserving the integrity of the electrode structure during cycling.

The crosslinking of the polyelectrolyte by the crosslinking agent selected from the polyphosphate and the combination of EDTA and sodium ions may proceed through creating electrostatic interactions between the crosslinking agent and the polymeric chains of the polyelectrolyte. Without wishing to being bound by theory or mechanism of action, it is contemplated that electrostatic interactions may enhance the stabilizing efficiency of the binder while maintaining the flexibility required to alleviate structural changes of the electrode active material.

One of the further advantages of the polyphosphate- and EDTA-based crosslinking agents is that their incorporation into the electrode may not require any additional process steps as compared to the use of a non-crosslinked binder. Without wishing to being bound by theory or mechanism of action, it is contemplated that crosslinking of the polyelectrolyte by said crosslinking agent is induced by applying one or more of heat and pressure, such that a common electrode preparation process that includes heating that is configured to cure the binder and/or pressing the electrode composition to obtain the final electrode structure, is sufficient to produce the crosslinked polyelectrolyte binder.

Stability of an electrode slurry composition comprising the crosslinked binder according to the principles of the present invention may be improved even if the binder is not crosslinked prior to the application of heat and/or pressure. Without wishing to being bound by theory or mechanism of action, it is assumed that the electrostatic interactions between the crosslinking agent and the polyelectrolyte assist in the creation of a substantially stable polymer network in the slurry that improves homogeneity of the electrode slurry and prolongs its shelf-life. Furthermore, the addition of the crosslinking agent may serve as a buffer, stabilizing the pH of the electrode slurry. The use of the crosslinked binder of the present invention may further allow using higher solids contents within the slurry as compared to a non-crosslinked binder.

### Electrode active material

The term "electrode active material", as used herein, refers to a material that may generate or receive electrons or, alternatively, a material that may be oxidized or reduced or, alternatively, a material capable of reversibly incorporating and releasing chemical species serving as charge carriers, in an electrochemical energy storage device. The term "anode active material", as used herein, refers to electrode active materials associated with the anode, while the term "cathode active material", as used herein, refers to electrode active materials associated with the cathode.

The electrode active material that is typically employed in lithium ion batteries may be separated into materials suitable for use in the anode that have high lithium chemical potential and undergo electrochemical oxidation during discharge, releasing electrons to the external circuit and lithium ions into the electrolyte; and materials suitable for use in the cathode that have low lithium chemical potential and undergo electrochemical reduction by lithium ions from the electrolyte, taking up electrons from the external circuit. Both anode and cathode materials may be intercalation materials, e.g., layered materials that can host lithium ions between the layers. The term "intercalation material", as used herein, refers to a material with the capability to reversibly intercalate and deintercalate one or more chemical species, such as, but not limited to, alkali metal and/or alkali metal ion.

Cathode intercalation materials in lithium-ion batteries are generally based on rock salt-type lithium transition-metal oxides that provide high-energy densities, such as, but not limited to, LiCoO₂, or polyanionic materials with high-rate capability, such as, but not limited to, LiFePO₄. Lithium intercalation into, and deintercalation from, a transition metal oxide intercalation material MO₂ (where M denotes one or more transition metals within the oxide) may be expressed by Equation I:

MO₂ + xLi⁺ + xe⁻ ↔ Li(₁₋ₓ)MO₂ Equation I

where x is a fraction of lithium, based on the total amount of lithium present in MO₂ that undergoes intercalation/deintercalation.

Anode intercalation materials in lithium-ion batteries are generally based on carbon-based materials, such as, but not limited to, graphite, and silicon-based materials. Lithium intercalation into, and deintercalation from, graphite may be expressed by Equation II:

LiC₆ ↔ C₆ + xLi⁺ + xe⁻ Equation II

The electrode active material may further be a lithium alloying material. The term "lithium alloying material", as used herein refers to one or more elements that alloy with lithium to form an alloy or an intermetallic compound. Non-limiting examples of lithium alloying materials include silicon, tin, lead, zinc, magnesium, sodium, aluminum, gallium, indium, germanium, alloys, and combinations thereof.

The electrode active material suitable for use in the electrodes, electrode slurries, devices and methods of the present invention may be selected from, but not limited to, graphite, amorphous carbon, mesoporous carbon, silicon, silicon suboxide, silicon dioxide, carbon-modified silicon-based material, tin, antimony, cobalt, cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and combinations thereof.

Non-limiting examples of suitable anode active materials include graphite, amorphous carbon, mesoporous carbon, silicon, silicon suboxide, silicon dioxide, carbon-modified silicon-based material, tin, antimony, and cobalt. Non-limiting examples of suitable cathode active materials include cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, and copper fluoride.

For example, the electrode may be an anode that contains graphite as the electrode active material. Graphite contains carbon atoms in parallel graphene layers between which lithium may be intercalated. While a total volume expansion of graphite upon full lithiation is not significant, the use of a crosslinked binder according to the principles of the present invention may assist in enhancing the cycle life and performance of the graphite-based anodes.

In another example, the electrode may be an anode that contains silicon, silicon suboxide or silicon alloy as the electrode active material. The term "silicon suboxide", as used herein, refers to a compound of formula SiOx, wherein 0 < x < 2 and is meant to encompass also a mixture of compounds that may include one or more of Si and SiO₂, so as to have an average composition represented by the formula SiOx. Silicon may undergo a large volume expansion during lithiation, thereby producing electrically isolated active material particles having high specific surface area. Such volume expansion results in the loss of the electrode capacity, increase in resistance, and accelerated electrolyte decomposition reaction. The use of the crosslinked binder according to the principles of the present invention may be particularly advantageous for use in silicon-based anodes.

In another example, the electrode may be an anode containing carbon-modified silicon-based material.

For example, the electrode may be a cathode containing lithium nickel manganese cobalt oxide, as the electrode active material. In another example, the electrode may be a cathode containing lithium iron phosphate, as the electrode active material. While the electrode active material within the cathode does not experience significant volumetric changes during charge and discharge cycles, the use of the crosslinked binder according to the principles of the present invention may improve stability of the cathode at high operation voltages.

The electrode active material may be present in the electrode in a weight percent (%wt.) ranging from about 50 to about 99.5, based on the total weight of the electrode. According to some embodiments, the electrode active material may be present in the electrode in a weight percent ranging from about 90 to 99.5, or from about 92 to about 98, or from about 94 to about 97, based on the total weight of the electrode.

Electrode active material is generally present in a particulate form. Particles of the electrode active material may have any shape as known in the art, such as, but not limited to, spherical, substantially spherical, polyhedral, ellipsoidal, plate, needle, rod, wire, ribbon, or pillar shape. The mean particle size of the electrode active material may range from several tens of nanometers to several hundreds of micrometers, such as from about 50 nm to about 500 µm, measured as described in ISO 13320:2020, for example, using a particle size analyzer, such as the Mastersizer^{®} 3000 from Malvern Panalytical^{®}.

### Polyelectrolyte

The term "polyelectrolyte", as used herein, refers to a water-soluble polymer having at least one permanent charge of either an anionic or cationic nature, when dissolved or dispersed in an aqueous medium. Preferably, the polyelectrolyte is an anionic polyelectrolyte (also termed herein "polyanion"). The polyelectrolyte may include a hydrocolloid polymer. The term "hydrocolloid polymer", as used herein, refers to hydrophilic polymers that are capable of forming viscous dispersions and/or gels when dispersed in water. It is to be understood that the term "hydrocolloid" used in connection with the term "polymer" refers to the type of a polymer, and not to the type of dispersion formed by said polymer, such that the hydrocolloid polymer is not required to act as a hydrocolloid and form viscous dispersions or gels within the electrode slurry.

As disclosed hereinabove, the polyelectrolyte of the crosslinked binder according to the principles of the present invention is composed of monomer units, wherein at least a portion of the monomer units has at least one carboxyl group per unit. In some embodiments, at least a portion of the monomer units of the polyelectrolyte has at least one hydroxyl group per unit.

The term "carboxyl group", as used herein, is meant to encompass a-C(=O)O⁻ (anionic) group, -C(=O)OH (protonated or acidic) group, as well as a carboxyl salt. The term "carboxyl salt", as used herein, refers to a -C(=O)O⁻ M⁺ group wherein M⁺ is a metal ion. M⁺ may be selected from, but not limited to, lithium, sodium, magnesium, calcium, potassium, barium, iron, aluminum, zinc, and quaternary ammonium.

The term "hydroxyl group", as used herein, is meant to encompass a -C-O⁻ (anionic) group, -C-OH (protonated) group, as well as a hydroxyl salt. The term "hydroxyl salt", as used herein, refers to a -C-O⁻ M⁺ group wherein M⁺ is a metal ion. M⁺ may be selected from, but not limited to, lithium, sodium, magnesium, calcium, potassium, barium, iron, aluminum, zinc, and quaternary ammonium.

The polyelectrolyte may include at least about 10% of the monomer units that have at least one carboxyl group per unit. The polyelectrolyte may include at least about 30% of the monomer units that have at least one carboxyl group per unit. The polyelectrolyte may include at least about 50% of the monomer units that have at least one carboxyl group per unit. The polyelectrolyte may include at least about 70% of the monomer units that have at least one carboxyl group per unit. The polyelectrolyte may include at least about 90% of the monomer units that have at least one carboxyl group per unit. The polyelectrolyte may be composed of monomer units, wherein each monomer unit has at least one carboxyl group per unit.

The number of the carboxyl group per one monomer unit may also vary. For example, at least a portion of the monomer units may have at least two carboxyl groups per unit or at least three carboxyl groups per unit.

According to some embodiments, the polyelectrolyte does not include an amine group, such as a primary-, secondary-, tertiary- or quaternary amine.

Polyelectrolytes may be natural or synthetic. A natural polyelectrolyte may be a hydrocolloidal polymer that is derived from a natural source, such as, but not limited to, a polysaccharide, polypeptide, proteoglycan, or glycoprotein. Non-limiting examples of suitable polysaccharides include cellulose (optionally substituted, e.g., carboxymethyl cellulose), alginate (including sodium alginate (SA) and alginic acid), xanthan gum (XG), and gum Arabic (GA). Synthetic polyelectrolyte may include, *inter alia,* a poly(acrylic acid).

According to some embodiments of the invention, the polyelectrolyte is selected from poly(acrylic acid), carboxymethyl cellulose, and any combination thereof.

Poly(acrylic acid) is a derivative of acrylic acid that contains CH₂-CHCO₂H monomers. The chemical structure of poly(acrylic acid) is shown in Formula 1 below, wherein n is higher than 2. The term "poly(acrylic acid)", as used herein, is meant to encompass both homopolymers and copolymers, which include the CH₂-CHCO₂H monomers, as well as partially or fully deprotonated derivatives and salts thereof. In a water solution at neutral pH, PAA is an anionic polymer, wherein at least a portion of the side chains of PAA is deprotonated thereby acquiring a negative charge. Formula 2 below shows a PAA copolymer, where A represents any monomer that is not the CH₂-CHCU₂H monomer. The copolymer may be selected from alternating copolymers, random copolymers, block copolymers, and graft copolymers. The term "poly(acrylic acid)" may further encompass a poly(acrylic acid) polymer that is covalently crosslinked by any organic molecule or polymer that can form covalent bonds with the carboxylic groups of the poly(acrylic acid), as long as there remains at least a portion of the monomer units of PAA that have at least one free carboxyl group per unit. The crosslinked polymers may be identical or different, for example, as shown in Formulas 3 and 4, respectively, where X may be any type of a crosslinker moiety and R is a carboxylic group substituent. The term "free carboxylic group", as used herein, refers to a carboxylic group that is not bound to said organic molecule or polymer that can form covalent bonds with the carboxylic groups of the poly(acrylic acid).

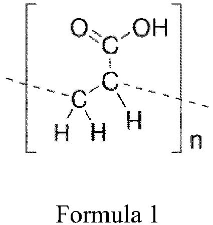

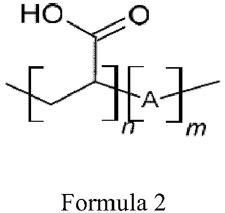

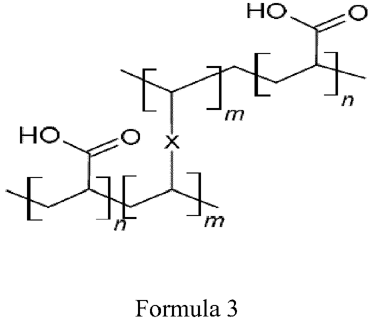

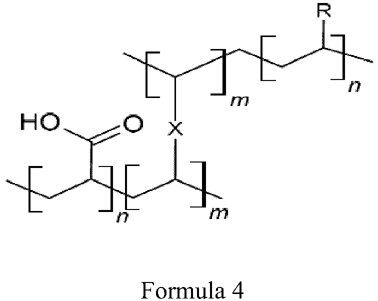

In some embodiments, the polyelectrolyte is PAA. In further embodiments, the polyelectrolyte is a PAA homopolymer.

Carboxymethyl cellulose is a cellulose derivative with carboxymethyl groups (-CH₂-COOH) bound to some of the hydroxyl groups of the glucopyranose monomers that make up the cellulose backbone. The chemical structure of carboxymethyl cellulose is shown in Formula 5, wherein each R is independently selected from H and -CH₂-COOH, and n is higher than 2. The term "carboxymethyl cellulose", as used herein, is meant to encompass both homopolymers and copolymers, which include the monomers shown in Formula 5, as well as partially or fully deprotonated derivatives and salts thereof. Carboxymethyl cellulose may have different degrees of substitution of the cellulose structure.

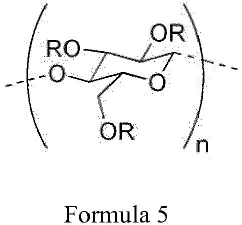

In certain embodiments, the polyelectrolyte is CMC. In further embodiments, the polyelectrolyte is a CMC homopolymer.

The molecular weight of the polyelectrolyte may affect the crosslinking efficiency of the crosslinked binder. The polyelectrolytes suitable for use in the aspects and embodiments of the present invention may have a number average molecular weight ranging from about 50 kDa to about 3000 kDa, as measured, for example, using ISO 16014-3:2019. In some embodiments, the number average molecular weight of the polyelectrolyte ranges from from about 50 kDa to about 750 kDa, or about 300 kDa to about 3000 kDa or, more particularly, from about 300 kDa to about 600 kDa.

In some embodiments, the polyelectrolyte is the poly(acrylic acid). In some embodiments, the polyelectrolyte is PAA having a number average molecular weight in the range of about 300 kDa - 600 kDa. In certain embodiments, the polyelectrolyte is PAA having a number average molecular weight of about 450 kDa.

In some embodiments, the polyelectrolyte is carboxymethyl cellulose.

Without wishing to being bound by theory or mechanism of action, it is contemplated that the electrode according to the principles of the present invention may contain smaller amounts of the polyelectrolyte as compared to a non-crosslinked polyelectrolyte of the same type, owing to the higher cohesive and adhesive efficiency of the crosslinked binder and higher stability of the electrode containing the crosslinked binder.

The polyelectrolyte may be present in the electrode in a weight percent ranging from about 0.5 to about 50, based on the total weight of the electrode. According to some embodiments, the polyelectrolyte is present in the electrode in a weight percent ranging from about 0.5 to about 10 or, more particularly, from about 1 to about 8, based on the total weight of the electrode. In yet further embodiments, the polyelectrolyte is present in the electrode in a weight percent ranging from about 2 to about 5, based on the total weight of the electrode. In yet further embodiments, the polyelectrolyte is present in the electrode in a weight percent ranging from about 10 to about 25, based on the total weight of the electrode.

### Crosslinked binder

The crosslinked binder according to the principles of the present invention comprises the polyelectrolyte as described hereinabove that is crosslinked by a crosslinking agent.

The terms "crosslinked" and "crosslinking", as used herein, are meant to encompass formation of covalent, electrostatic, hydrogen, and/or dynamic crosslinking bonds formed by the crosslinking agent between the polymer chains. The crosslinking agent may further form, or enhance, bonds between the polyelectrolyte and the electrode active material, for example, wherein the electrode active material comprises a silicon-based material. It is to be understood that the crosslinking agent according to the principles of the present invention may offer the above listed advantages merely by inducing the crosslinking between the polymer chains, without forming or enhancing bonds between the polymer and the electrode active material, e.g., in instances where carbon-based electrode active material is used.

The term "crosslinked binder", as used herein, is meant to encompass a binder having various degrees of crosslinking, such as from about 1% to about 100%, as well as a combination of the binder with the crosslinking agent, wherein the binder is configured to undergo crosslinking by the crosslinking agent before the crosslinking takes place, e.g., in the electrode slurry prior to applying heat and/or pressure.

The term "crosslinking degree", as used herein, refers to the percentage of polyelectrolyte chains that are interconnected by the crosslinking agent, based on the total number of the polyelectrolyte chains.

Without wishing to being bound by theory or mechanism of action, it is assumed that the crosslinking may proceed through electrostatic interactions between the at least one carboxyl group of the polyelectrolyte and the crosslinking agent. For example, crosslinking may proceed through electrostatic interactions between said at least one carboxyl group and the carboxyl groups or orthophosphate groups of the crosslinking agent. Said interaction may be formed with the help of a monovalent cation, which may originate from a salt of the crosslinking agent and/or an additional salt. Alternatively, or additionally, the crosslinking may proceed through an electrostatic interaction between the at least one carboxyl group of the polyelectrolyte and any atom of the crosslinking agent other than carbon and hydrogen, such as, but not limited to, nitrogen and phosphorous.

The crosslinking of the polyelectrolyte by the crosslinking agent may be detected, *inter alia,* by Fourier-transform infrared spectroscopy (FTIR). Quantitative FTIR spectra may be recorded from a non-crosslinked polyelectrolyte specimen and from a crosslinked polyelectrolyte specimen and the -OH and -COOH bands of the two specimens may be compared. A shift and/or diminishing or disappearance of any peaks of the -OH and - COOH band of the crosslinked polyelectrolyte specimen, as compared to the non-crosslinked polyelectrolyte specimen, may be considered as resulting from the crosslinking of the polyelectrolyte by the crosslinking agent.

In some embodiments, the crosslinked binder comprising poly(acrylic acid) is characterized by the diminishing of the -OH stretching band near 3000 cm⁻¹. In some embodiments, the crosslinked binder comprising poly(acrylic acid) is characterized by the diminishing of the -C=O stretching band near 1700 cm⁻¹ corresponding to the C(=O)OH peak of the poly(acrylic acid). In some embodiments, the crosslinked binder comprising poly(acrylic acid) is characterized by the appearance of the C(=O)O⁻ peak near 1600 cm⁻¹.

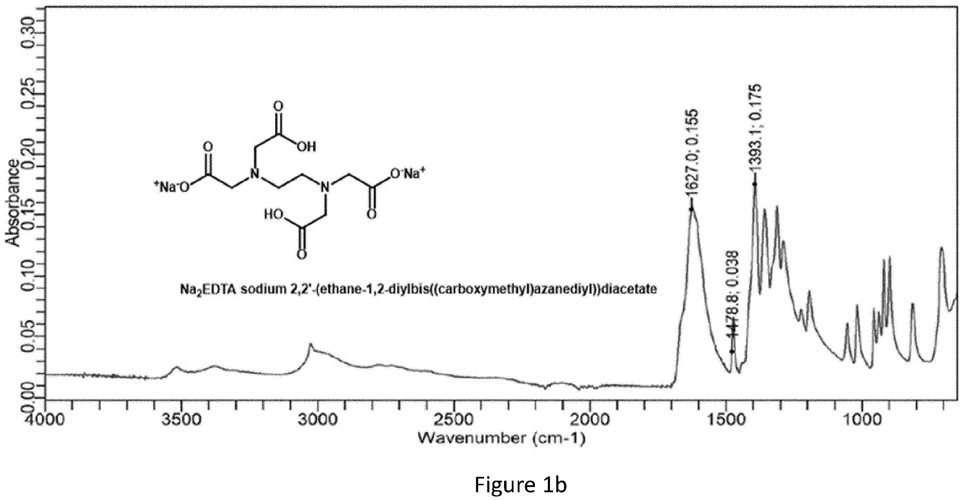

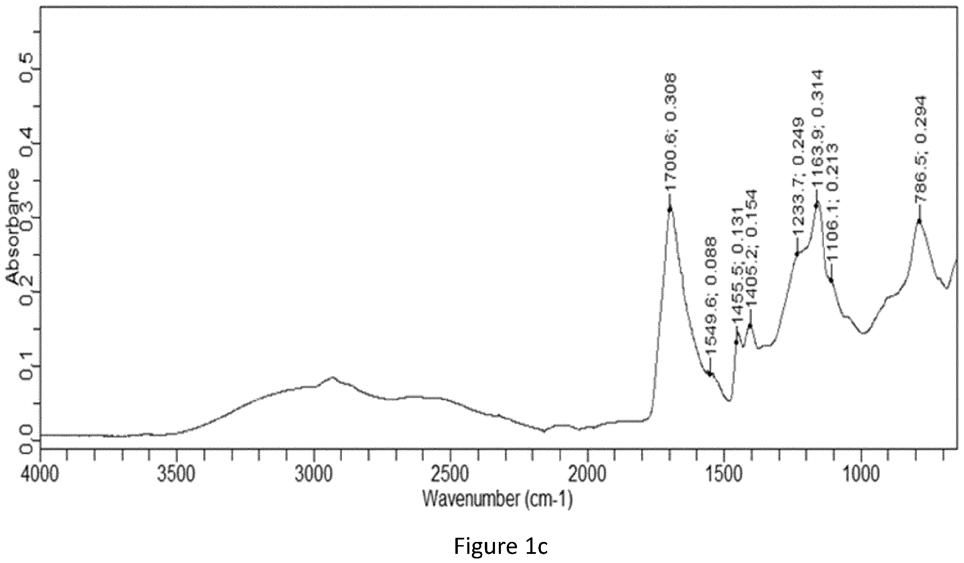

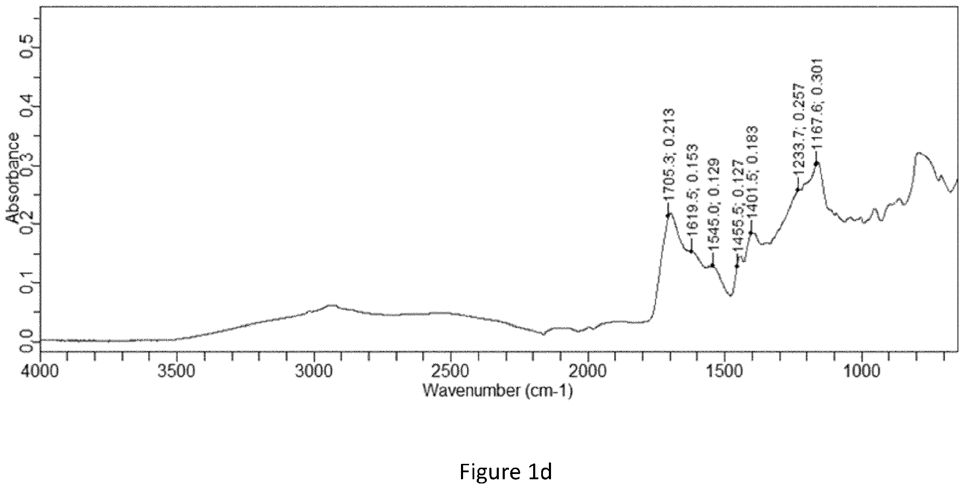

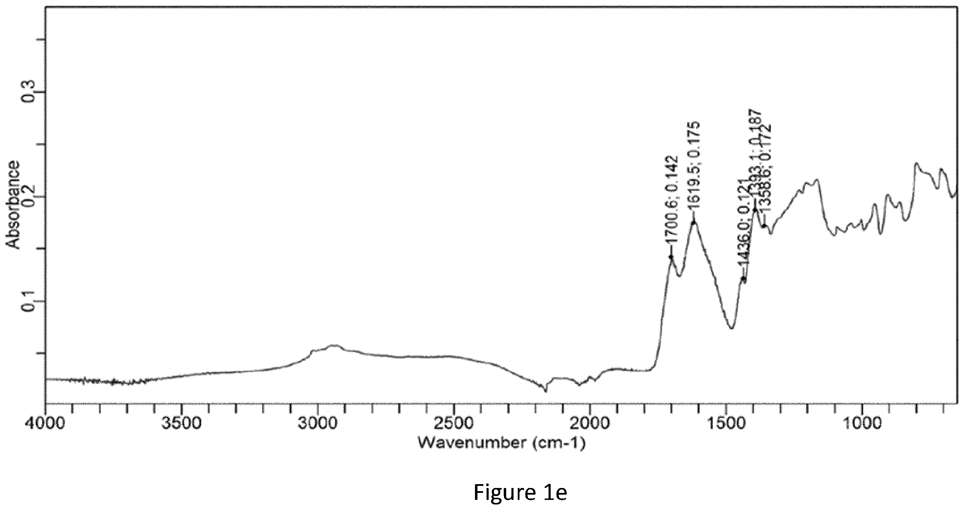

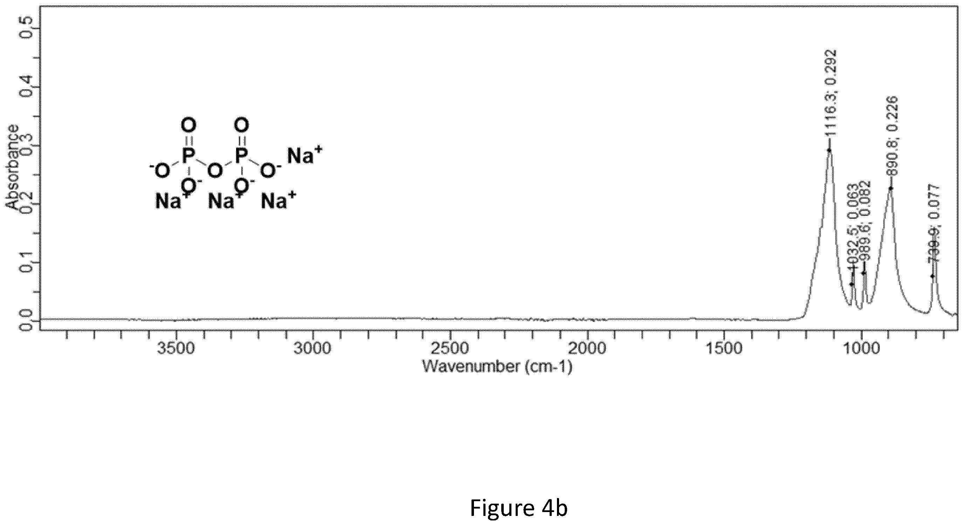

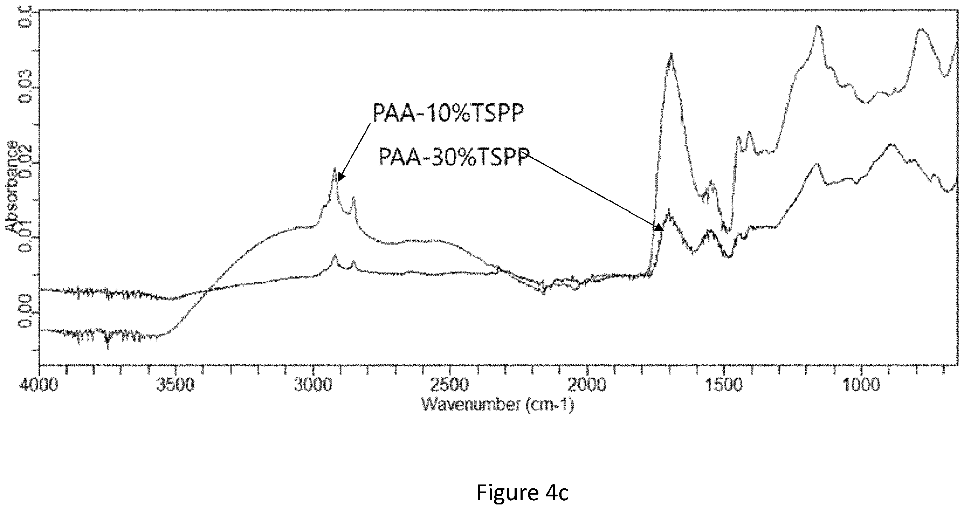

In some embodiments, the crosslinked binder comprising poly(acrylic acid) is characterized by the FTIR spectra of any one of Figures 1c-1e and 4c.

### Polyphosphate crosslinking agent

According to various aspects and embodiments of the invention, the crosslinked binder comprises polyphosphate, which serves as the crosslinking agent that crosslinks the polyelectrolyte.

The term "polyphosphate", as used herein, refers to dimers and polymers consisting of repeating units of orthophosphate (PO₄) linked in a phosphor-anhydride (P-O-P) linkage. The number of repeating units may range from 2 to 10. It is to be understood that the term "polyphosphate" is meant to encompass acids, anions, and salts of polyphosphates. The polyphosphate salt may include, *inter alia,* an alkali metal salt such as, but not limited to, a sodium, potassium or lithium salt. The polyphosphate salt may further include an ionic liquid salt, such as, but not limited to, imidazolium, ammonium, pyridinium, pyrrolidinium, pyridazinium, pyrimidinium, pyrazinium, pyrazolium, piperidinium, thiazolium, 1,2,3-triazolium, 1,2,4-triazolium, oxazolium, isoquinolinium, or quinolinium salt.

It is to be understood that when a salt is used in the preparation methods described herein, the choice of a suitable salt depends, *inter alia,* on the possible effect of the salt counterion on the resultant electrode. For example, the salt may be chosen such that the counter ion (e.g., the cation in the case of the polyphosphate salt) would be neutral, would not affect the crosslinking efficiency of the crosslinking agent, or would not poison the electrode active material.

The polyphosphate useful in the electrode, electrode slurry, method, and device of the present invention may have a number average molecular weight ranging from about 150 g/mole to about 700 g/mole. In some embodiments, the polyphosphate has a number average molecular weight ranging from about 150 g/mole to about 350 g/mole.

Non-limiting examples of suitable polyphosphates include pyrophosphate, tripolyphosphate, and hexametaphosphate.

Pyrophosphate is a phosphorus oxyanion that contains two repeating units of orthophosphate in the phosphor-anhydride linkage. The chemical structure of pyrophosphate is shown in Formula 6. The term "pyrophosphate" is meant to encompass acids, anions, and salts of pyrophosphates. A number of pyrophosphate salts exist, such as, but not limited to, disodium pyrophosphate (Na₂H₂P₂O₇), tetrasodium pyrophosphate (Na₄P₂O₇), potassium pyrophosphate (K₄P₂O₇), ammonium pyrophosphate (H₁₈N₄O₈P₂), and pyridinium pyrophosphate (C₂₀H₂₄N₄O₇P₂). The anionic form of a pyrophosphate is a pyrophosphate anion, and the acidic form of the pyrophosphate may include pyrophosphoric acid.

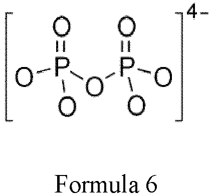

For example, the polyphosphate that is used in the method of forming the electrode may be a pyrophosphate salt, wherein upon addition to the electrode slurry it will be dissolved. In the electrode said pyrophosphate may be present in the anionic form that interacts with the salt cation or in any derivatized form that allows to form crosslinking bonds between the polyelectrolyte chains.

According to some embodiments of the invention, the polyphosphate is pyrophosphate. According to further embodiments, the polyphosphate is tetrasodium pyrophosphate.

Tripolyphosphate is a phosphorus oxyanion that contains three repeating units of orthophosphate in the phospho-anhydride linkage. The chemical structure of tripolyphosphate is shown in Formula 7. The term "tripolyphosphate" is meant to encompass acids, anions, and salts of pyrophosphates. For example, a tripolyphosphate salt may include, *inter alia,* sodium triphosphate (Na₅P₃O₁₀), pentapotassium triphosphate (K₅O₁₀P₃), or ammonium triphosphate (H₂₀N₅O₁₀P₃). The anionic form of tripolyphosphate is a polyphosphate penta-anion, and the acidic form of the pyrophosphate may include triphosphoric acid.

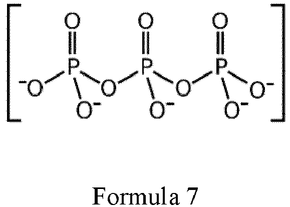

For example, the polyphosphate that is used in the method of forming the electrode may be a tripolyphosphate salt, wherein upon addition to the electrode slurry it will be dissolved and converted into its anionic form. In the electrode said tripolyphosphate may be present in the anionic form that interacts with the salt cation or in any derivatized form that allows to form crosslinking bonds between the polyelectrolyte chains.

According to some embodiments, the polyphosphate is tripolyphosphate. According to further embodiments, the polyphosphate is sodium tripolyphosphate.

The crosslinking agent, e.g., the polyphosphate, may be present in the electrode in an amount sufficient to crosslink the polymer to form a 3D polymeric network. Preferably, the crosslinking agent is present in the amount that allows formation of the stable network that reduces or prevents electrode active material disintegration during cycling. The weight ratio between the polyelectrolyte and the polyphosphate may range from about 100: 1 to about 4:1. In some embodiments, the weight ratio between the polyelectrolyte and the polyphosphate ranges from about 80:1 to about 9:1. In further embodiments, the weight ratio between the polyelectrolyte and the polyphosphate ranges from about 50:1 to about 20:1. It is to be understood that the weight ratio refers to the polyphosphate being in the acidic or anionic form, as well as to the polyphosphate salt.

The weight ratio between the polyelectrolyte and pyrophosphate may range from about 100:1 to about 10:1. In some embodiments, the weight ratio between the polyelectrolyte and pyrophosphate ranges from about 100:1 to about 20:1. In further embodiments, the weight ratio between the polyelectrolyte and pyrophosphate ranges from about 100:1 to about 40:1.

The weight ratio between the polyelectrolyte and tripolyphosphate may range from about 100:1 to about 4:1. In some embodiments, the weight ratio between the polyelectrolyte and tripolyphosphate ranges from about 50:1 to about 4:1. In further embodiments, the weight ratio between the polyelectrolyte and tripolyphosphate ranges from about 20:1 to about 4:1.

The polyphosphate may be present in the electrode in a weight percent ranging from about 0.05 to about 2, based on the total weight of the electrode. In some embodiments, the polyphosphate is present in the electrode in a weight percent ranging from about 1 to about 1.5, based on the total weight of the electrode.

The binder comprising the polyphosphate as the crosslinking agent may further comprise at least one of a monovalent metal cation or an ionic liquid cation. Without wishing to being bound by theory or mechanism of action, it is contemplated that said cations may enhance the crosslinking efficiency of the polyelectrolyte and further improve the stability of the electrode slurry and the solid electrode, as well as the performance of the electrochemical energy storage device.

The term "-valent", as used herein, refers to the maximum number of electrons available for covalent chemical bonding in its valence (outermost electron shell). For example, the term "monovalent", as used herein, refers to a state of an atom with one electron available for covalent chemical bonding in its outermost electron shell, and the term "divalent", as used in some embodiments, refers to a state of an atom with two electrons available for covalent chemical bonding in its outermost electron shell. It is to be understood, however, that the term "monovalent", e.g., does not necessarily relate to the oxidation state of +2, such that a divalent metal cation may be present in the oxidation state of either +1 or +2. Non-limiting examples of suitable monovalent metal cations include a sodium ion (Na⁺), lithium ion (Li⁺), potassium ion (K⁺), and any combination thereof.

The term "ionic liquid cation", as used herein, refers to the cations of organic salts that are liquid at a temperature of about 150°C and below. Non-limiting examples of suitable ionic liquid cations include imidazolium, ammonium, pyridinium, pyrrolidinium, pyridazinium, pyrimidinium, pyrazinium, pyrazolium, piperidinium, thiazolium, 1,2,3-triazolium, 1,2,4-triazolium, oxazolium, isoquinolinium, quinolinium, and any combination thereof. The ionic liquid cation may be unsubstituted. Alternatively, the ionic liquid may be substituted by at least one of alkyl, ester, acyl, and acetyl.

The cations present in the binder may originate from the polyphosphate salt used in the preparation of the electrode, such as, but not limited to, tetrasodium pyrophosphate or potassium pyrophosphate. Additionally, or alternatively, said cations may further originate from the salt of the polyelectrolyte. Furthermore, an additional source of the cations may be used, such as, but not limited to, a phosphate salt.

According to some embodiments, the polyelectrolyte is electrostatically crosslinked by the polyphosphate. The polyelectrolyte may be electrostatically crosslinked by the polyphosphate via the cation.

The molar ratio between the polyphosphate and the cation may range from about 5:1 to about 1:5. In some embodiments, the molar ratio between the polyphosphate and the cation ranges from about 4:1 to about 1:4. In further embodiments, the molar ratio between the polyphosphate and the cation ranges from about 3:1 to about 1:3. In yet further embodiments, the molar ratio between the polyphosphate and the cation ranges from about 2:1 to about 1:2. In certain embodiments, the molar ratio between the polyphosphate and the cation is about 1:1.

The molar ratio between the at least one carboxyl group of the polyelectrolyte and the polyphosphate may range from about 30:1 to about 1:1. In some embodiments, the molar ratio between the at least one carboxyl group of the polyelectrolyte and the polyphosphate ranges from about 20:1 to about 10:1.

The molar ratio between the at least one carboxyl group of the polyelectrolyte and the cation may range from about 30:1 to about 1:1. In some embodiments, the molar ratio between the at least one carboxyl group of the polyelectrolyte and the cation ranges from about 20:1 to about 10:1.

It is to be understood that the weight percentages and the weight or molar ratios of the cation disclosed herein refer to the cation that is part of the binder of the electrode and assists in the crosslinking of the polyelectrolyte. For example, if said cation is lithium, it may originate from additional sources, such as, an opposite electrode and/or electrolyte and, as such, be present in the electrode in an amount that is much higher than that required for crosslinking. In such case, the indicated weight percentage and the weight or molar ratios of the cation would refer only to the portion of lithium cations that are added or utilized in the electrode for the crosslinking, and would not cover the additional amount of lithium cations that may be present in the electrode and have a different function or originate from a different source other than the binder.

The binder may further comprise a divalent metal cation. A non-limiting example of the divalent metal cation is a calcium ion (Ca²⁺). Without wishing to being bound by theory or mechanism of action, it is contemplated that the addition of the divalent metal cations, such as calcium ions, disrupts to a certain extent the crosslinked polymer network formed by the polyphosphate (optionally combined with cations such as monovalent metal cations) and increases the flexibility of said network. Preferably, the addition of the divalent ions does not decrease the adhesive and/or cohesive properties of the crosslinking binder.

The molar ratio between the at least one carboxyl group of the polyelectrolyte and the divalent metal cation may range from about 300:1 to about 10:1. In some embodiments, the molar ratio between the at least one carboxyl group and the divalent metal cation ranges from about 200:1 to about 100:1.

The molar ratio between the polyphosphate and the divalent metal cations may range from about 100:1 to about 5:1.

The crosslinking agent of the crosslinked binder may further improve the bonding of the electrode active particles by forming electrostatic interactions with said particles. For example, when a silicon-based electrode active material is used in the anode, hydrogen bonding may form between the native oxide layers of the Si surfaces and polar-functional groups of the binder. The polyphosphate may interact with the electrode active material of the electrode by forming hydrogen bonds, e.g., between the hydroxyl groups of the polyphosphate and the surface groups of the electrode active material.

In some embodiments, the electrode comprises graphite as the electrode active material and PAA crosslinked by pyrophosphate as the crosslinked binder.

In some embodiments, the electrode comprises graphite as the electrode active material and PAA crosslinked by tripolyphosphate as the crosslinked binder.

In some embodiments, the electrode comprises graphite as the electrode active material and CMC crosslinked by pyrophosphate as the crosslinked binder.

In some embodiments, the electrode comprises graphite as the electrode active material and CMC crosslinked by tripolyphosphate as the crosslinked binder.

### EDTA and sodium ions crosslinking agent

According to various aspects and embodiments of the invention, the crosslinked binder comprises EDTA and sodium ions, which serve as the crosslinking agent that crosslinks the polyelectrolyte.

Ethylenediaminetetraacetic acid (EDTA) is an aminopolycarboxylic acid having a chemical structure as shown in Formula 8 below. EDTA is a strong chelating agent that is widely used to bind iron and/or calcium ions.

The term EDTA, as used herein, refers to the acidic form of the EDTA molecule, as well to its anionic form and its salts. The anionic form of EDTA may include ethylenediaminetetraacetate (EDTA⁽²⁻⁾) that is tetracarboxylic acid anion formed by deprotonation of two of the four carboxyl groups in ethylenediaminetetraacetic acid, or ethylenediaminetetraacetate tetra anion that is tetracarboxylic acid anion formed by deprotonation of the four carboxyl groups in ethylenediaminetetraacetic acid. The salts of EDTA include, but are not limited to, ethylenediaminetetraacetic acid disodium salt, ethylenediaminetetraacetic acid trisodium salt, ethylenediaminetetraacetic acid tetrasodium salt, ethylenediaminetetraacetic acid dipotassium salt, ethylenediaminetetraacetic acid tripotassium salt, ethylenediaminetetraacetic acid calcium disodium salt, sodium calcium edetate, and ethylenediaminetetraacetic acid diammonium salt.

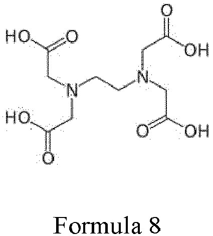

Without wishing to being bound by theory or mechanism of action, it is contemplated that sodium ions present in the electrode in combination with EDTA enhance the crosslinking efficiency of EDTA by inducing electrostatic interactions between the at least one carboxyl group of the polyelectrolyte and the carboxyl groups of EDTA and improve the properties of the crosslinked binder. It is to be understood that sodium ions present in the electrode may originate from one or more of a sodium salt of EDTA, such as, but not limited to, ethylenediaminetetraacetic acid disodium salt, ethylenediaminetetraacetic acid trisodium salt, or ethylenediaminetetraacetic acid tetrasodium salt; a sodium salt of the polyelectrolyte, such as, but not limited to, a sodium salt of PAA; and/or an additional source of sodium ions, such as, but not limited to, a sodium phosphate. Sodium ions may be present in the electrode in a lower molar concentration than EDTA, the same molar concentration as EDTA or a higher molar concentration than EDTA. It is, however, a prerequisite that crosslinked binder comprises sodium ions in addition to EDTA.

The molar ratio between EDTA and sodium ions may range from about 5:1 to about 1:5. In some embodiments, the molar ratio between EDTA and sodium ions ranges from about 4:1 to about 1:4. In further embodiments, the molar ratio between EDTA and sodium ions ranges from about 3:1 to about 1:3. In yet further embodiments, the molar ratio between EDTA and sodium ions ranges from about 2:1 to about 1:2. In certain embodiments, the molar ratio between EDTA and sodium ions is about 1:1.

The weight ratio between the polyelectrolyte and EDTA may range from about 5:1 to about 15:1, for example, from about 6:1 to about 13:1, or from about 7:1 to about 11:1. In some embodiments, the weight ratio between the polyelectrolyte and EDTA is about 9:1.

The weight ratio between the polyelectrolyte and sodium ions may range from about 200:1 to about 50:1.

EDTA may be present in the electrode in a weight percent ranging from about 0.05 to about 10, based on the total weight of the electrode. In some embodiments, EDTA is present in the electrode in a weight percent ranging from about 0.05 to about 2 or, more particularly, from about 0.1 to about 1.5, based on the total weight of the electrode. EDTA may be present in the electrode in a form of a salt, such as, but not limited to, the sodium salt (Na-EDTA).

The polyelectrolyte may be crosslinked by EDTA and sodium ions via electrostatic bonds. In some embodiments, the crosslinked binder comprises PAA that is electrostatically crosslinked by EDTA and sodium ions.

The crosslinked binder comprising EDTA and sodium ions as crosslinking agent may further include cations selected from monovalent metal cations other than sodium ions and ionic liquid cations. Said cations may further enhance the crosslinking efficiency of EDTA. The monovalent metal cations and the ionic liquid cations may be selected as described hereinabove in connection with the polyphosphate crosslinking agent. The molar ratio between sodium ions and the cations may range from about 100:1 to about 1:5. In some embodiments, the molar ratio between sodium ions and the cations ranges from about 50:1 to about 1:1.

The binder may further comprise divalent metal cations. A non-limiting example of the divalent metal cations is calcium ions (Ca²⁺). Without wishing to being bound by theory or mechanism of action, it is contemplated that the addition of the divalent metal cations, such as calcium ions, disrupts to a certain extent the crosslinked polymer network formed by EDTA and sodium ions and increases the flexibility of said network.

The molar ratio between sodium ions and the divalent metal cations may range from about 100:1 to about 10:1.

In some embodiments, the electrode comprises graphite as the electrode active material and PAA crosslinked by EDTA and sodium ions as the crosslinked binder.

### Electrode additives

The electrode containing the crosslinked binder may further include one or more electrode additives that may further improve the performance of the electrode and of the device containing such electrode. The weight or volume percentage of the electrode additives may be selected based on the intended use of the electrochemical energy storage device. For example, in energy optimized cells, the relative amount of additives should be minimized as additives do not store energy. In power optimized cells, good contact and conductivity are more important, such that the relative amount of additives may be higher. Generally, the amount of the electrode additives may constitute up to about 10 wt.% or vol.%. It is to be understood that the crosslinked binder is included within said amount of electrode additives.

One of the beneficial features of the crosslinked binder according to the principles of the present invention is that it may be used as a sole binder material of the electrode, providing the required electrode stability. In some instances, the electrode may further include one or more rubber-based latex-type binders, such as, but not limited to, a styrene butadiene rubber (SBR) latex, nitrile butadiene rubber (NBR) latex, methyl methacrylate butadiene rubber latex, chloroprene rubber latex, carboxy modified styrene butadiene rubber latex, and a modified polyorganosiloxane-based polymer latex.

In lithium-ion batteries, the electrode should preferably allow for the flow of both lithium ions and electrons, thereby being both a good ionic conductor and electronic conductor. In order to construct conductive percolation network, conductive additives may be added to the electrode active materials. Said conductive additive may be used to reduce impedance-associated power losses of the cell and to allow faster charge and discharge. The electrical properties of the electrode may vary depending on the mixing rate of electrode active material and the conductive additive.

The conductive additive may be selected from an electronically conducting material, an ionically conducting material, or a combination thereof.

Non-limiting examples of electronically conducting materials include carbonaceous materials such as carbon, graphite, graphene, reduced graphene oxide, fullerenes, carbon nanotubes, and carbon fibers; metals, such as copper, nickel, aluminum, or silver; metal sulfides; metal carbides; metal borides; metal oxides; and combinations thereof. In some embodiments, the electrode comprises one or more electronically conducting materials being in a form of fine particles (e.g., nanoscale particles), which may form percolating networks and enhance conductivity of the electrode. In some embodiments, the electronically conductive material comprises carbon. Non-limiting examples of suitable carbons include carbon black, acetylene black and Ketjen black. The use of the electronically conducting material may be particularly beneficial wherein the electrode active material has a low electron conductivity, such as, but not limited to, a silicon-based material.

The electrode may further include an ionically conducting material, e.g., a Li-ion conducting material. Addition of the ionically conducting material may reduce impedance-related losses associated with the Li ion transport at the electrode-electrolyte interface and the bulk of the electrode. The ionically conducting material may be present in the form of particles mixed with the other electrode components or in the form of a coating that coats the electrode active material or the electrode surface. Non-limiting examples of suitable Li-ion conducting materials include lithium imide (Li₃N), lithium oxide (Li₂O), lithium sulfate (Li₂SO₄), lithium fluoride (LiF), lithium phosphate (Li₃PO₄), lithium carbonate (Li₂CO₃), aluminum oxide (Al₂O₃), zinc oxide (ZnO), titanium oxide (TiO), hafnium oxide (HfO), and combinations thereof.

The conductive additive may be present in the electrode in a weight percent ranging from about 0.05 to about 25, based on the total weight of the electrode. In some embodiments, the conductive additive is present in the electrode in a weight percent ranging from about 0.25 to 5 or, more particularly, from about 0.1 to about 4, based on the total weight of the electrode. In further embodiments, the conductive additive is present in the electrode in a weight percent ranging from about 1 to about 2, based on the total weight of the electrode.

In some embodiments, the electrode comprises from about 50 to about 99.5 or, more particularly, from about 90 to about 99.5 %wt. of the electrode active material, from about 0.1 to about 10 or, more particularly, from about 0.05 to about 2 %wt. of the polyelectrolyte, from about 0.05 to about 10 %wt. of the polyphosphate, and from about 0.2 to about 25 or, more particularly, from about 0.2 to about 7 %wt. of the conductive additive.

In some embodiments, the electrode comprises from about 50 to about 99.5 or, more particularly, from about 90 to about 99.5 %wt. of the electrode active material, from about 0.5 to about 10 %wt. of the polyelectrolyte, from about 0.05 to about 10 or, more particularly, from about 0.05 to about 2 %wt. of Na-EDTA, and from about 0.2 to about 25 or, more particularly, from about 0.2 to 7 %wt. of the conductive additive.

The electrode according to the principles of the present invention may be a porous electrode. The term "porous", as used herein, refers to a structure of interconnected pores or voids such that continuous passages and pathways throughout a material are provided. In some embodiments, the porosity of the electrodes is from about 10% to about 90%, such as, but not limited to, from about 10% to about 70%, from about 10% to about 50%, or from about 15% to about 20%.

The pores of the electrode, in particular after the electrode has been incorporated into the electrochemical energy storage device, may be filled with a suitable electrolyte. The weight percentages as disclosed herein refer to the weight of the electrodes which do not contain electrolyte or a solvent, unless stated otherwise. In other words, said weight percentages refer to the relative weight of the electrode components, based on the total weight of the dry and/or solid content of the electrode.

The electrode additive may further include an adhesion promoter that promotes adhesion of the electrode active material to the binder. Non-limiting examples of suitable adhesion promoters include silanes, titanates, and phosphonates.

For example, the electrode may comprise from about 50 to about 99.5 %wt. of the electrode active material, from about 0.5 to about 10 %wt. of the polyelectrolyte, from about 0.05 to about 10 %wt. of the polyphosphate, and from about 0.2 to about 25 %wt. of the conductive additive. In additional embodiments, the electrode comprises from about 50 to about 99.5 %wt. of the electrode active material, from about 0.5 to about 10 %wt. of the polyelectrolyte, from about 0.05 to about 10 %wt. of Na-EDTA, and from about 0.2 to about 25 %wt. of the conductive additive.

### Electrode slurry

The electrode may be prepared by forming an electrode slurry and applying said slurry to a current collector or forming a free-standing electrode from said electrode slurry. In various aspects and embodiments of the present inventio, the electrode slurry comprises an electrode active material, a binder, and one or more solvents, wherein the binder comprises a polyelectrolyte composed of monomer units, wherein at least a portion of the monomer units has at least one carboxyl group per unit, and a crosslinking agent. It is to be understood that the term "crosslinked binder", as used in connection with the electrode slurry embodiments, refers to a polyelectrolyte that is configured to be crosslinked by the crosslinking agent, wherein said crosslinking may be induced, e.g., by the application of heat and/or pressure.

The crosslinking agent is selected from a polyphosphate and a combination of ethylenedinitrilotetraacetic acid (EDTA) and sodium ions, as described in detail hereinabove.

The electrode active material and the polyelectrolyte may be selected as described in detail hereinabove.

The electrode active material may be present in the electrode slurry in a weight percent ranging from about 30 to about 75 %wt., based on the total weight of the electrode slurry. The term "total weight of the electrode slurry" refers to the weight of the solid material plus the weight of the one or more solvents. In some embodiments, the electrode active material is present in the electrode slurry in a weight percent ranging from about 45 to about 60 %wt.

The polyelectrolyte may be present in the electrode slurry in a weight percent ranging from about 0.175 to about 7.5 %wt., based on the total weight of the electrode slurry. In some embodiments, the polyelectrolyte is present in the electrode slurry in a weight percent ranging from about 1 to about 5 %wt.

The polyphosphate may be present in the electrode slurry in a weight percent ranging from about 0.02 to about 1 %wt., based on the total weight of the electrode slurry. In some embodiments, the polyphosphate is present in the electrode slurry in a weight percent ranging from about 0.1 to about 0.5 %wt.

EDTA or a sodium salt thereof may be present in the electrode slurry in a weight percent ranging from about 0.02 to about 1 %wt., based on the total weight of the electrode slurry. In some embodiments, EDTA or its sodium salt is present in the electrode slurry in a weight percent ranging from about 0.1 to about 0.5 %wt.

In some embodiments, the electrode slurry comprises graphite as the electrode active material, PAA as the polyelectrolyte and pyrophosphate as the crosslinking agent.

In some embodiments, the electrode slurry comprises graphite as the electrode active material, PAA as the polyelectrolyte and tripolyphosphate as the crosslinking agent.

In some embodiments, the electrode slurry comprises graphite as the electrode active material, CMC as the polyelectrolyte, and pyrophosphate as the crosslinking agent.

In some embodiments, the electrode slurry comprises graphite as the electrode active material, CMC as the polyelectrolyte, and tripolyphosphate as the crosslinking agent.

In some embodiments, the electrode slurry comprises graphite as the electrode active material and PAA crosslinked by EDTA and sodium ions as the crosslinked binder.

The electrode slurry may further include one or more electrode additives. In some embodiments, the electrode slurry further includes a conductive additive as described in detail hereinabove.

The electrode slurry comprises one or more solvents in which the electrode active material, the binder, and, optionally, the conductive additive, are dispersed or dissolved. The solvent(s) may be selected from water, a water-based solvent, or an organic solvent.

For example, the electrode slurry may be aqueous. The use of water instead of organic solvents is beneficial for the environment and allows easier handling. However, polyelectrolyte binders, which are typically used in aqueous electrode slurries may be unstable and may strongly affect the rheological properties of the electrode slurry. The use of the crosslinked binder according to the principles of the present invention may increase the stability of the polyelectrolyte and of the aqueous electrode slurry as a whole and assist in controlling its viscosity.

Non-limiting examples of suitable organic solvents include NMP, dimethylformamide (DMF), acetone, ethylene carbonate (EC), and ethyl methyl carbonate (EMC).

The viscosity of the electrode slurry may range from about 1000 to about 7500 cp as measured at 25°C and a shear rate of 10 sec-1, measured according to ASTM standard D4287.

The electrode slurry may remain stable for at least about 1 hour following its formation. The terms "stable" and "stability", as used herein in relation to the electrode slurry, refer in some embodiments, to the ability of the slurry to maintain the solid ingredients in a uniformly dispersed or dissolved state within the solvent and/or to prevent agglomeration, sedimentation, and/or precipitation of the solid ingredients.

Preparation of the electrode slurry may include a step of mixing the crosslinked binder comprising the polyelectrolyte and the crosslinking agent with the electrode active material to obtain a mixture comprising the crosslinked binder and the electrode active material. Said mixture may be obtained, for example, by mixing the electrode active material, the polyelectrolyte, and the crosslinking agent with one or more solvents that dissolve or disperse the polyelectrolyte and the crosslinking agent. Additionally, or alternatively, said mixture may be obtained by mixing the polyelectrolyte and the crosslinking agent in one or more solvents that dissolve or disperse the polyelectrolyte and the crosslinking agent, and mixing an obtained mixture with the electrode active material to obtain the electrode slurry. Furthermore, said mixture may be obtained by mixing the electrode active material and the polyelectrolyte in a solvent that dissolves or disperses the polyelectrolyte and mixing an obtained slurry with the crosslinking agent to obtain the electrode slurry.

The crosslinking agent may be added in a dry form. The crosslinking agent may be added as a solution comprising the crosslinking agent.

Said one or more solvents may be water or a water-based solvent, such as, but not limited to, an aqueous buffer. The solution comprising the crosslinking agent may be an aqueous solution. Alternatively, the one or more solvents may comprise organic solvents, as detailed hereinabove.

The crosslinking agent for use in the preparation of the electrode slurry may be selected from a polyphosphate and a combination of EDTA with sodium ions.

The binder may further comprise monovalent and/or divalent metal cations. Said monovalent and/or divalent metal cations may be added to the electrode slurry in a form of a salt. In some related embodiments, the mixing comprises mixing the electrode active material, the polyelectrolyte, the crosslinking agent, and said salt with the one or more solvents. Additionally, or alternatively, the mixing may include mixing the polyelectrolyte, the crosslinking agent, and said salt in the one or more solvents, and mixing an obtained solution with the electrode active material. Furthermore, the mixing may include mixing the electrode active material and the polyelectrolyte in the solvent that dissolves or disperses the polyelectrolyte and mixing an obtained slurry with the crosslinking agent and said salt.

For example, the crosslinking agent may be a polyphosphate and the mixture may comprise the electrode active material, the polyelectrolyte and the polyphosphate. In some related embodiments, said mixture is obtained by mixing the electrode active material, the polyelectrolyte, and the polyphosphate with one or more solvents that disperses the polyelectrolyte and dissolves the polyphosphate to obtain the electrode slurry. In additional related embodiments, said mixture is obtained by mixing the polyelectrolyte and the polyphosphate in the one or more solvents that disperse the polyelectrolyte and dissolve the polyphosphate, and mixing an obtained mixture with the electrode active material. In further related embodiments, said mixture is obtained by mixing the electrode active material and the polyelectrolyte in a solvent that disperses the polyelectrolyte and mixing an obtained slurry with the polyphosphate. The polyphosphate may be added in a dry form or in the form of a solution.

To prepare the electrode slurry, the sodium salt of the polyphosphate may be used. The polyphosphate may be present in the electrode slurry in a form of a dissolved sodium salt. The polyphosphate may be in the form of a salt comprising a cation selected from the monovalent metal cation and the ionic liquid cation, as described in detail hereinabove. In some embodiments, the polyphosphate is selected from sodium tripolyphosphate, sodium pyrophosphate, sodium hexametaphosphate, and any combination thereof.

The polyelectrolyte and the polyphosphate may be mixed at a weight ratio ranging from about 100:1 to about 4:1.

The mixture may further include divalent metal cations, such as, but not limited to, calcium cations. In some embodiments, the mixture comprises calcium phosphate. Calcium phosphate may be present in the mixture in a concentration that is lower than or equal to its solubility limit in the one or more solvents.

For example, the crosslinking agent may be EDTA combined with sodium cations and the mixture may comprise the electrode active material, the polyelectrolyte, EDTA and sodium ions. In some related embodiments, said mixture is obtained by mixing the electrode active material and the polyelectrolyte with one or more solvents that dissolve or disperse the polyelectrolyte; and adding a sodium salt of EDTA (Na-EDTA) to the mixture of the electrode active material and the polyelectrolyte. Na-EDTA may be added in a dry form or in a form of a solution. Alternatively, the mixture may be obtained by mixing the polyelectrolyte and Na-EDTA in one or more solvents that dissolve or disperse the polyelectrolyte and Na-EDTA; and mixing an obtained solution or mixture with the electrode active material. In some embodiments, the mixture is obtained by mixing the electrode active material, the polyelectrolyte, and Na-EDTA with one or more solvents that dissolve or disperse the polyelectrolyte and Na-EDTA. The polyelectrolyte and Na-EDTA may be mixed at a weight ratio ranging from about 5:1 to about 15:1. In certain embodiments, the polyelectrolyte and Na-EDTA are mixed at a weight ratio of about 1:1.

The mixture may be further obtained by mixing the electrode active material and the polyelectrolyte with one or more solvents that dissolve or disperse the polyelectrolyte; and adding EDTA and a sodium salt to the mixture of the electrode active material and the polyelectrolyte. The EDTA, the sodium salt, or both, may be added in a dry form or in the form of one or more solutions. In further embodiments, the mixture is obtained by mixing the polyelectrolyte, EDTA and the sodium salt in one or more solvents that dissolve or disperse the polyelectrolyte, EDTA, and the sodium salt; and mixing an obtained solution or mixture with the electrode active material. The mixture may be further obtained by mixing the electrode active material, the polyelectrolyte, EDTA, and the sodium salt with one or more solvents that dissolve or disperse the polyelectrolyte, EDTA, and the sodium salt. The polyelectrolyte and EDTA may be mixed at a weight ratio ranging from about 5:1 to about 15:1. The sodium salt and EDTA may be mixed at a molar ratio ranging from about 5:1 to about 1:5. In certain embodiments, the polyelectrolyte and EDTA are mixed at a weight ratio of about 1:1 and the sodium salt and EDTA are mixed at a molar ratio of about 1:1.

In some embodiments, the mixture is obtained by mixing the electrode active material and the polyelectrolyte with one or more solvents that dissolve or disperse the polyelectrolyte; and adding Na-EDTA and an additional sodium salt to the mixture of the electrode active material and the polyelectrolyte. Na-EDTA, the additional sodium salt or both may be added in a dry form or in the form of one or more solutions. The mixture may be further obtained by mixing the polyelectrolyte, Na-EDTA, and the additional sodium salt in one or more solvents that dissolve or disperse the polyelectrolyte, Na-EDTA, and the additional sodium salt; and mixing an obtained solution or mixture with the electrode active material. In further embodiments, the mixture is obtained by mixing the electrode active material, the polyelectrolyte, Na-EDTA, and the additional sodium salt with one or more solvents that dissolve or disperse the polyelectrolyte, Na-EDTA, and the additional sodium salt. The polyelectrolyte and Na-EDTA may be mixed at a weight ratio ranging from about 5:1 to about 15:1. Na-EDTA and the additional sodium salt may be mixed at a molar ratio ranging from about 100:1 to about 2:1.

The sodium salt, the additional sodium salt, or both, may comprise any salt which anion does not interfere with the electrode's composition or intended use. In some embodiments, the sodium salt, the additional sodium salt, or both, comprise sodium phosphate.

The electrode slurry may contain from about 30 to about 75 %wt. of the electrode active material, from about 0.175 to about 7.5 %wt. of the polyelectrolyte, and from about 0.02 to about 1 %wt. of the polyphosphate, based on the total weight of the electrode slurry. The electrode slurry may further include from about 0.1 to about 5 %wt. of the conductive additive. The one or more solvents may include water and/or an aqueous buffer.

In some embodiments, the electrode slurry comprises from about 30 to about 74.5 %wt. of the electrode active material, from about 0.175 to about 7.5 %wt. of the polyelectrolyte, and from about 0.02 to about 1 %wt. of Na-EDTA, based the total weight of the electrode slurry. The electrode slurry may further include from about 0.1 to about 5 %wt. of the conductive additive. The one or more solvents may include water and/or an aqueous buffer.

Mixing of the solid ingredients and the one or more solvents may be carried out by any suitable mixing technique and/or device, such as, but not limited to, a mixer, planetary mixer, Hobart mixer, Eirich mixer, deaerator, bead mill, sand mill, pigment disperser, grinder, ultrasonic disperser, and homogenizer. The electrode active material may be mixed with the conductive additive prior to mixing with the binder and the one or more solvents.

### Electrode preparation

A method of forming the electrode for electrochemical energy storage device according to the various aspects and embodiments of the present invention comprises heating the mixture of the electrode active material and the crosslinked binder comprising the polyelectrolyte and the crosslinking agent to a predefined temperature and/or applying a pressure to said mixture. Said mixture may be in the form of the electrode slurry that may comprise one or more solvents.

The mixing may be performed in a liquid medium, for example, by mixing the solid ingredients and the one or more solvents. In certain such embodiments, the mixing step may be performed as detailed in the various embodiments hereinabove in relation to the electrode slurry preparation. Alternatively, the mixing step may be performed in a dry medium, for example by means of a dry powder mixer or a ball mill.

Without wishing to being bound by theory or mechanism of action, it is contemplated that crosslinking of the polyelectrolyte by the crosslinking agent is at least partially induced by energy transferred to the system by heating and/or applying pressure thereto. The crosslinking process may start spontaneously in the electrode slurry after the electrode active material, the polyelectrolyte and the crosslinking agent are brought together, however, in order to increase the crosslinking efficiency, application of energy in the form of heat or pressure is required. When crosslinking is assisted by heating, the predefined temperature may preferably be within a certain temperature range from the glass transition temperature of the polyelectrolyte. For example, the predefined temperature may be within a +/- 2°C range from the glass transition temperature of the polyelectrolyte. In some embodiments, the predefined temperature is at least about 2°C above the glass transition temperature of the polyelectrolyte. In further embodiments, the predefined temperature is at least about 5°C above the glass transition temperature of the polyelectrolyte. In yet further embodiments, the predefined temperature is at least about 7°C above the glass transition temperature of the polyelectrolyte. In still further embodiments, the predefined temperature is at least about 10°C above the glass transition temperature of the polyelectrolyte. For example, where the polyelectrolyte is PAA having a glass transition temperature of about 101°C, the predefined temperature may be about 110°C.

Without further wishing to being bound by theory or mechanism of action, it is assumed that the use of EDTA combined with sodium ions as the crosslinking agent may allow to reduce the temperature required for the crosslinking reaction, as compared to the use of EDTA alone.

The method of forming the electrode may include a step of applying the electrode slurry to a current collector or molding the electrode slurry into a desired shape prior to heating and/or applying the pressure. In some embodiments, the electrode slurry is applied to the current collector. The electrode slurry may be applied to the current collector by any suitable process as known in the art, for example, by doctor-blade coating, slot die coating, or reverse roll coating.

As mentioned hereinabove, the crosslinking may commence within the electrode slurry prior to heating, wherein said crosslinking may stabilize the slurry. The stabilized slurry may then be applied to the current collector and the heat may be applied to continue and enhance the crosslinking process. Without wishing to being bound by theory or mechanism of action, it is contemplated that applying the electrode slurry to the current collector prior to applying heat allows to transfer the electrode slurry that is still relatively flexible (before the crosslinking density of the polyelectrolyte is increased) to the current collector and then setting the electrode structure, e.g., by heating.

The heating step may constitute the curing step that is routinely carried out in the electrode preparation processes. As such, the method of forming the electrode according to the principles of the present invention may not require an additional step of curing the electrode slurry applied to the current collector. Alternatively, the method of forming the electrode may include an additional heating step configured to cure the electrode slurry. The additional heating step may be performed after the heating step that is configured to induce or enhance crosslinking.

The step of applying pressure may constitute a calendering (also termed "compression-molding") step that is routinely carried out in the electrode preparation processes. A lithium-ion battery electrode is typically obtained as an electrode sheet by calendering the current collector and electrode slurry applied thereon by one or more top and bottom rollers. As such, the method of forming the electrode according to the principles of the present invention may not require an additional step of calendering the electrode slurry applied to the current collector. Alternatively, the method of forming the electrode may include an additional pressing step configured to compress the electrode to obtain the desired thickness and porosity and to further improve the adhesion of the electrode active material to the current collector.

The method of forming the electrode may include both heating and applying pressure to the obtained mixture (e.g., electrode slurry). For example, the method may include applying the electrode slurry to the current collector, applying the pressure to the electrode slurry that is applied to the current collector, and heating the electrode slurry applied to the current collector that has undergone pressing. Without wishing to being bound by theory or mechanism of action, it is contemplated that pressing the electrode slurry applied to the current collector prior to heating allows to establish the desired porosity of the electrode.

The heating may be performed in two separate steps. For example, a first heating step may be performed following application of the electrode slurry to the current collector and the second heating step may be performed following application of pressure. Preferably, the first heating step is performed at a lower temperature than the second heating step. The temperature of the first heating step may be at least 10°C lower than of the second heating step, at least about 20°C lower or at least about 30°C lower. The first heating step may be configured to dry the electrode slurry following its application to the current collector or at least partially remove the one or more solvents from the electrode slurry.

In some embodiments, the polyelectrolyte is PAA and heating comprises drying the electrode slurry applied to the current collector at a temperature ranging from about 60°C to about 100°C and curing at a temperature ranging from about 90°C to about 130°C.

### Secondary lithium-ion battery

A secondary lithium battery according to the various aspects and embodiments of the present invention includes a case, a positive terminal, a cathode, a separator, an electrolyte, a negative terminal and an anode. At least one of the cathode and the anode comprises an electrode active material and a crosslinked binder, wherein the crosslinked binder comprises a polyelectrolyte composed of monomer units, wherein at least a portion of the monomer units has at least one carboxyl group per unit, and a crosslinking agent, wherein the polyelectrolyte is crosslinked by the crosslinking agent, and wherein the electrode active material is held together by the crosslinked binder. The crosslinking agent is selected from a polyphosphate and a combination of ethylenedinitrilotetraacetic acid (EDTA) and sodium ions, as described in detail hereinabove.

The electrode active material and the polyelectrolyte may be selected as described in detail hereinabove. For example, the anode active material may be selected from graphite, amorphous carbon, mesoporous carbon, silicon, tin, antimony, cobalt, and any combination thereof. The cathode active material may be selected from cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and any combination thereof.

The secondary lithium battery may include the case, the positive terminal, the cathode, the separator, the electrolyte, the negative terminal and an anode comprising an anode active material and the crosslinked binder.

The secondary lithium battery may include the case, the positive terminal, the cathode, the separator, the electrolyte, the negative terminal and an anode, wherein said cathode comprises a cathode active material and the crosslinked binder.

In some embodiments, the anode comprises graphite as the electrode active material and PAA crosslinked by pyrophosphate as the crosslinked binder. In some embodiments, the anode comprises graphite as the electrode active material and PAA crosslinked by tripolyphosphate as the crosslinked binder. In some embodiments, the anode comprises graphite as the electrode active material and CMC crosslinked by pyrophosphate as the crosslinked binder. In some embodiments, the anode comprises graphite as the electrode active material and CMC crosslinked by tripolyphosphate as the crosslinked binder. In some embodiments, the anode comprises graphite as the electrode active material and PAA crosslinked by EDTA and sodium ions as the crosslinked binder.

In some embodiments, the anode comprises silicon, silicon suboxide or silicon alloy as the electrode active material and PAA crosslinked by pyrophosphate as the crosslinked binder. In some embodiments, the anode comprises silicon, silicon suboxide or silicon alloy as the electrode active material and PAA crosslinked by tripolyphosphate as the crosslinked binder. In some embodiments, the anode comprises silicon, silicon suboxide or silicon alloy as the electrode active material and CMC crosslinked by pyrophosphate as the crosslinked binder. In some embodiments, the anode comprises silicon, silicon suboxide or silicon alloy as the electrode active material and CMC crosslinked by tripolyphosphate as the crosslinked binder. In some embodiments, the anode comprises silicon, silicon suboxide or silicon alloy as the electrode active material and PAA crosslinked by EDTA and sodium ions as the crosslinked binder.

In some embodiments, the cathode comprises lithium nickel manganese cobalt oxide as the electrode active material and PAA crosslinked by pyrophosphate as the crosslinked binder. In some embodiments, the cathode comprises lithium nickel manganese cobalt oxide as the electrode active material and PAA crosslinked by tripolyphosphate as the crosslinked binder. In some embodiments, the cathode comprises lithium nickel manganese cobalt oxide as the electrode active material and CMC crosslinked by pyrophosphate as the crosslinked binder. In some embodiments, the cathode comprises lithium nickel manganese cobalt oxide as the electrode active material and CMC crosslinked by tripolyphosphate as the crosslinked binder. In some embodiments, the cathode comprises lithium nickel manganese cobalt oxide as the electrode active material and PAA crosslinked by EDTA and sodium ions as the crosslinked binder.

In some embodiments, the cathode comprises lithium iron phosphate as the electrode active material and PAA crosslinked by pyrophosphate as the crosslinked binder. In some embodiments, the cathode comprises lithium iron phosphate as the electrode active material and PAA crosslinked by tripolyphosphate as the crosslinked binder. In some embodiments, the cathode comprises lithium iron phosphate as the electrode active material and CMC crosslinked by pyrophosphate as the crosslinked binder. In some embodiments, the cathode comprises lithium iron phosphate as the electrode active material and CMC crosslinked by tripolyphosphate as the crosslinked binder. In some embodiments, the cathode comprises lithium iron phosphate as the electrode active material and PAA crosslinked by EDTA and sodium ions as the crosslinked binder.

The cathode, anode, or both, may further include one or more electrode additives. In some embodiments, the cathode, the anode, or both, further include a conductive additive as described in detail hereinabove.

The anode is in electric contact with the negative terminal. The anode may have a standalone structure, e.g., molded into a desired shape. Alternatively, the anode may be supported on the current collector, which is also termed herein "anode current collector". The anode current collector may be electrically connected to the negative terminal.

The cathode is in electric contact with the positive terminal. The cathode may have a standalone structure, e.g., molded into a desired shape. Alternatively, the cathode may be supported on the current collector, which is also termed herein "cathode current collector". The cathode current collector may be electrically connected to the positive terminal.

The current collector may have any shape as known in the art and be made of any electrically conductive material that is chemically inert to the other components of the electrochemical energy storage device, and in particular, the electrolyte. Non-limiting examples of suitable current collector materials include copper, stainless steel, aluminum, nickel, titanium, sintered carbon, copper, and aluminum-cadmium alloys. Suitable current collector shapes include, but are not limited to, films, sheets, foils, nets, porous structures, foams, and non-woven fabrics.

In lithium-ion batteries, the electrolyte may be a liquid electrolyte, such as, but not limited to, a solution of lithium salt in a mixture of organic solvents. Non-limiting examples of suitable liquid solvents include ethylene carbonate, dimethyl carbonate, diethyl carbonate, propylene carbonate, gamma-butyrolactone, tetrahydrofuran, 1,2-dimethoxyethane, dioxolane, and combinations thereof. The lithium salt may be selected from, but not limited to, LiPF₆, LiBF₄, LiClO₄, LiN(SO₂CF₃)₂, and LiN(SO₂CF₂CF₃)₂.

Alternatively, a solid electrolyte may be employed, for example, a solid polymer electrolyte. Non-limiting examples of solid polymer electrolytes include polyethylene oxide, polytetrafluoroethylene, polyvinylidene fluoride, fluorine-containing copolymers, polyacrylonitrile, and combinations thereof.

When the electrode according to the principles of the present invention is employed as an anode in the electrochemical energy storage device, such as, a secondary lithium battery, the cathode may be any cathode suitable for use in secondary lithium batteries, as known in the art. The cathode active material suitable for use in the secondary lithium battery and the conductive additives are listed hereinabove and they may be combined with a suitable cathode binder. The cathode binder may include the crosslinked binder according to the principles of the present invention, or a different binder that is soluble in either an organic solvent, such as, but not limited to, PVDF, or water, such as, but not limited to, PAA or CMC/SBR.

When the electrode according to the principles of the present invention is employed as a cathode in the electrochemical energy storage device, such as, a secondary lithium battery, the anode may be any anode suitable for use in secondary lithium batteries, as known in the art. The anode active material suitable for use in the secondary lithium battery and the conductive additives are listed hereinabove and they may be combined with a suitable anode binder. The anode binder may include the crosslinked binder according to the principles of the present invention, or a different binder that is soluble in either an organic solvent, such as, but not limited to, PVDF, or water, such as, but not limited to, PAA or CMC/SBR.

The anode and the cathode may have any shape suitable for inserting into the case of the secondary lithium battery, such as, but not limited to, a sheet-like shape that may further be folded into any suitable shape such as a cylindrical shape, flat shape, or Z-folded shape. The shape of the case may be selected from a cylindrical, flat oval, or square shapes to provide prismatic, pouch, cylinder, or coin cell configurations. The case may be made of any material that is corrosion resistant to the electrolyte of the battery, such as, but not limited to, aluminum, stainless steel, or nickel-plated steel.

The secondary lithium batteries may be employed as a power supply and/or storage devices in a variety of applications. The secondary lithium battery according to the principles of the present invention may include a plurality of batteries forming a stack that provides the desired power rating and/or energy storage capacity.

As used herein, and in the appended claims, the singular forms "a", "an", and "the" include plural references unless the content clearly dictates otherwise. Thus, for example, reference to "an electrode additive" includes a plurality of such electrode additives and equivalents thereof known to those skilled in the art, and so forth. It should be noted that the term "and" or the term "or" is generally employed in its sense including "and/or" unless the content clearly dictates otherwise.

As used herein, the term "about", when referring to a measurable value such as an amount, a temporal duration, and the like, is meant to encompass variations of +/-10%, more preferably +/-5%, even more preferably +/-1%, and still more preferably +/-0.1% from the specified value.

The following examples are presented in order to more fully illustrate some embodiments of the invention. They should, in no way be construed, however, as limiting the broad scope of the invention. One skilled in the art can readily devise many variations and modifications of the principles disclosed herein without departing from the scope of the invention.

### Examples

### Example 1 - Preparation of an electrode slurry comprising PAA and Na-EDTA as the crosslinked binder

An electrode slurry comprising a crosslinked binder comprising PAA and a sodium salt of EDTA was prepared as follows:

0.7 g of EDTA disodium salt dihydrate (Na-EDTA) were added to 35 ml of water and stirred for about 1 hour until complete dissolution of Na-EDTA. 30 g of a 20% wt. PAA dispersion (300-500KDa) were added to the Na-EDTA solution. The PAA-Na-EDTA mixture was stirred for about 15 hours until PAA is fully dispersed.

15 ml of distilled (DI) water were added to the PAA-NaEDTA mixture followed by 67 g of graphite. The mixture was stirred for about 2 hours. 1.5 g of carbon black were slowly added to the mixture under stirring and stirring was continued for about 5 hours.

### Example 2 - Preparation of an electrode comprising PAA and Na-EDTA as the crosslinked binder

An electrode slurry comprising a crosslinked binder comprising PAA and a sodium salt of EDTA was prepared as follows:

1 g of EDTA disodium salt dihydrate (Na-EDTA) were added to 19 ml of water and stirred for about 1 hour until complete dissolution of Na-EDTA.

10.3, 9.65 and 9.05 ml (50% from the total amount) of DI water, respectively 2.5, 5 and 7.5g (5% wt, 10% wt and 15% wt from the binder amount) of Na-EDTA solution and respectively 23.8, 22.5 and 21.3g PAA 10% stock solution were mixed at 600 rpm for 10 minutes, followed by addition of 0.5 g of carbon black and mixing at 1200 rpm for 20 min. 47 g of graphite and respectively 10.3, 9.65 and 9.05 ml (remaining 50% from the total amount) of DI water were slowly added to the mixture under stirring (600 rpm) and stirring was continued at 1200 rpm for 15 minutes.

### Example 3- Preparation of an electrode comprising PAA and Na-EDTA as the crosslinked binder

An electrode comprising a crosslinked binder comprising PAA and a sodium salt of EDTA was prepared as follows. The electrode slurry was prepared as described in Example 1. Then about 2 ml of the electrode slurry were spread upon a 12x25 cm copper foil using a spreading bar lifted to a total of 1 10-micron gap.

The coated foil was placed in the oven at 80°C for about 14 hours. After drying, the coated foil was placed in a hot (~50°C) calendar and pressed at 50°C by a roll press, wherein the electrode was positioned between two copper foils. Pressing with the roll press was repeated until the desired thickness achieved. The electrode was then placed into an oven that is pre-heated to 110 °C and cured there for about 4 hours.

### Example 3 - Preparation of an electrode slurry comprising PAA and pyrophosphate as the crosslinked binder

An electrode slurry comprising a crosslinked binder comprising PAA and pyrophosphate was prepared as follows:

0.6 g of tetrasodium pyrophosphate were added to 35 ml of water and stirred for about 1 hour until complete dissolution of tetrasodium pyrophosphate. 30 g of a 20% wt. PAA dispersion (300-500KDa) were added to the pyrophosphate solution. The PAA-pyrophosphate mixture was stirred for about 15 hours until PAA was fully dispersed.

15 ml of DI water were added to the PAA-pyrophosphate mixture followed by 67 g of graphite. The mixture was stirred for about 2 hours. 1.5 g of carbon black was slowly added to the mixture under stirring and stirring was continued for about 5 hours.

### Example 4 - Preparation of an electrode comprising PAA and pyrophosphate as the crosslinked binder

An electrode slurry comprising a crosslinked binder comprising PAA and pyrophosphate was prepared as follows:

0.98 g of tetrasodium pyrophosphate was added to 19.02 ml of water and stirred for about 1 hour until complete dissolution of tetrasodium pyrophosphate.

10.25, 9.6 and 8.95 ml (50% from the total amount) of DI water, respectively 2.55, 5.102 and 7.65g (5%, 10% and 15% from the binder amount) of Na-TPSS solution and respectively 23.8, 22.5 and 21.3g PAA stock were mixed at 600 rpm for 10 minutes, followed by addition of 0.5 g of carbon black and mixing at 1200 rpm for 20 min. 47 g of graphite and respectively 10.25, 9.6 and 8.95 ml (remaining 50% from the total amount) of DI water were slowly added to the mixture under stirring (600 rpm) and stirring was continued at 1200 rpm for 15 minutes.

Then about 2 ml of the electrode slurry were spread upon a 12x25cm copper foil using a spreading bar lifted to a total of 100-micron gap.

The coated foil was placed in the oven at 80°C overnight. After drying, the coated foil was placed in a hot (~50°C) calendar and pressed at 50°C by a roll press, wherein the electrode was positioned between two copper foils. Pressing with the roll press was repeated until the desired thickness achieved. The electrode was then placed into an oven that is pre-heated to 110 °C and cured there for about 4 hours. The coated foil was cut into 14 mm diameter coins.

### Example 5 - Preparation of a coin cell containing an anode comprising the crosslinked binder

The coin cells were assembled in a glove box filled with argon. The cells were closed with an anode comprising the crosslinked binder as working electrode (WE), lithium foil (thickness 0.25 mm, ø 15.6 mm) as the reference/counter electrode. Between the electrodes, polypropylene separator (ø 19mm) and 100 µL of electrolyte solution were placed.

### Example 6 - Physical characterization of the PAA/Na-EDTA crosslinked binder

To verify the formation of crosslinking of the PAA by Na-EDTA, Fourier transform infrared (FTIR) analysis was performed by dissolution of PAA and the cross-linker in aqua media. The PAA/Na-EDTA samples with 10, 30, and 50% wt. of Na-EDTA were prepared by dissolution of PAA and the cross-linker in aqua media.

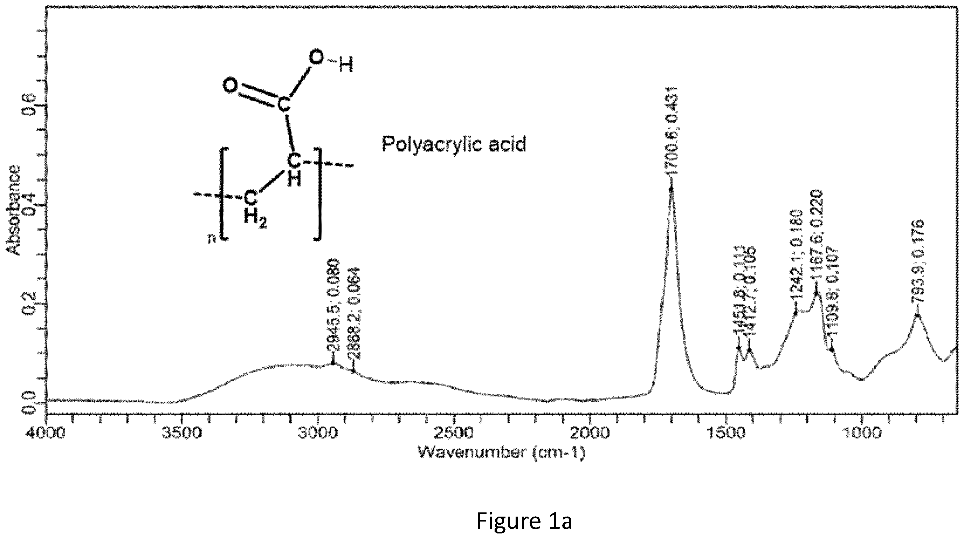

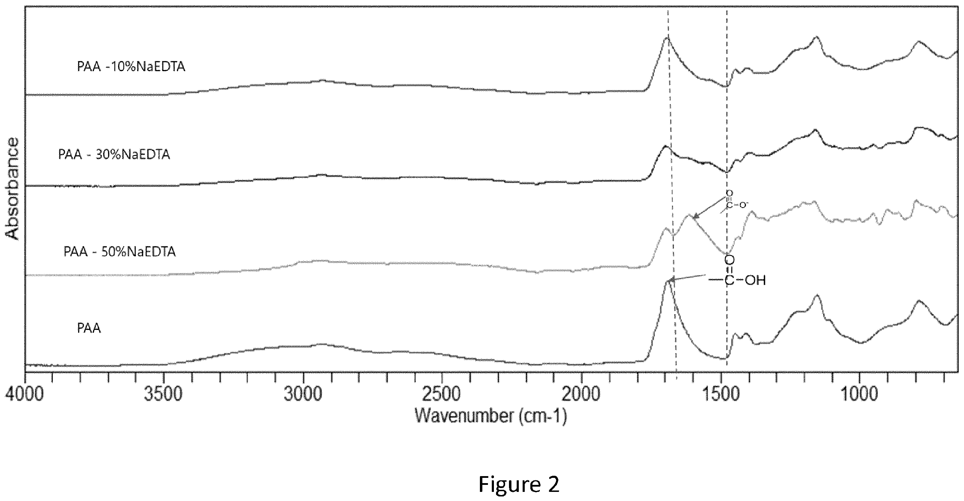

The FTIR spectra of pristine PAA, Na-EDTA and PAA/Na-EDTA with different content of Na-EDTA are presented in Figures 1a-1e. Figure 2 shows a single graph with all the spectra. All of the samples showed the peaks of the OH stretching band near 3000 cm⁻¹. It can be seen that the addition of Na-EDTA to PAA resulted in diminishing of the OH peak, wherein even the lowest concentration (10% wt.) of Na-EDTA had a pronounced effect on the OH peak. Based on this result, it may be assumed that the concentration of the protonated carboxylic groups of PAA decreases as they become deprotonated due to interaction with EDTA via sodium ions, which results in electrostatic crosslinking of the PAA by Na-EDTA.

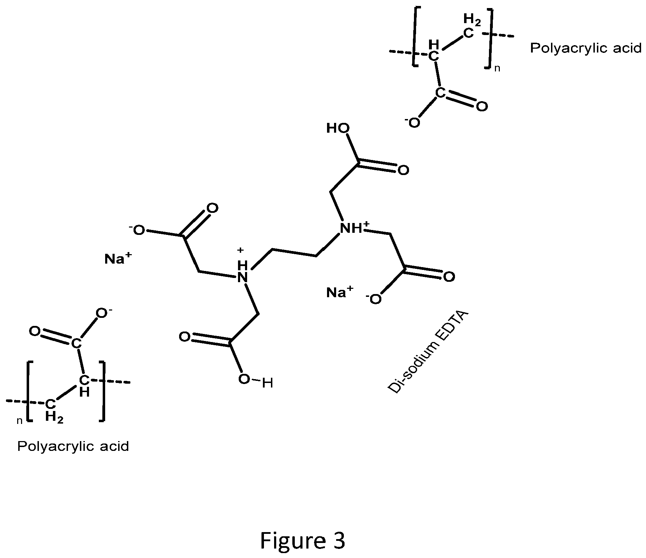

Additional changes in the FTIR spectra, when PAA is mixed with Na-EDTA, can be seen around C=O stretching peak near 1700 cm⁻¹, wherein the C(=O)OH peak is diminished in the 10% wt. sample and further diminished in the 30% wt. sample, where the C(=O)O- peak starts to appear (at slightly higher energies). The C(=O)O- peak gets even more pronounced in the 50% wt. sample, where its amplitude is higher than of the C(=O)OH peak. The decrease in the C(=O)OH peak, and appearance and increase in the C(=O)O- peak, may suggest that the carboxylic groups of the PAA get deprotonated as PAA is mixed with Na-EDTA, and crosslinking takes place between the deprotonated groups and EDTA through sodium ions. It can therefore be understood that the PAA-based binder containing Na-EDTA, according to the various embodiments of the present invention, is a crosslinked binder, wherein PAA is crosslinked by Na-EDTA. Figure 3 shows the chemical structure of the crosslinked binder, where the carboxylic groups of the PAA are deprotonated and can freely interact with Na-EDTA.

### Example 7 - Physical characterization of the PAA/pyrophosphate crosslinked binder

To verify the formation of crosslinking of the PAA by pyrophosphate, Fourier transform infrared (FTIR) analysis was performed by dissolution of PAA and the cross-linker in aqua media. The PAA/pyrophosphate samples with 5, 10 and 30% wt. of tetrasodium pyrophosphate (Na-pyrophosphate) were prepared by dissolution in aqua media.

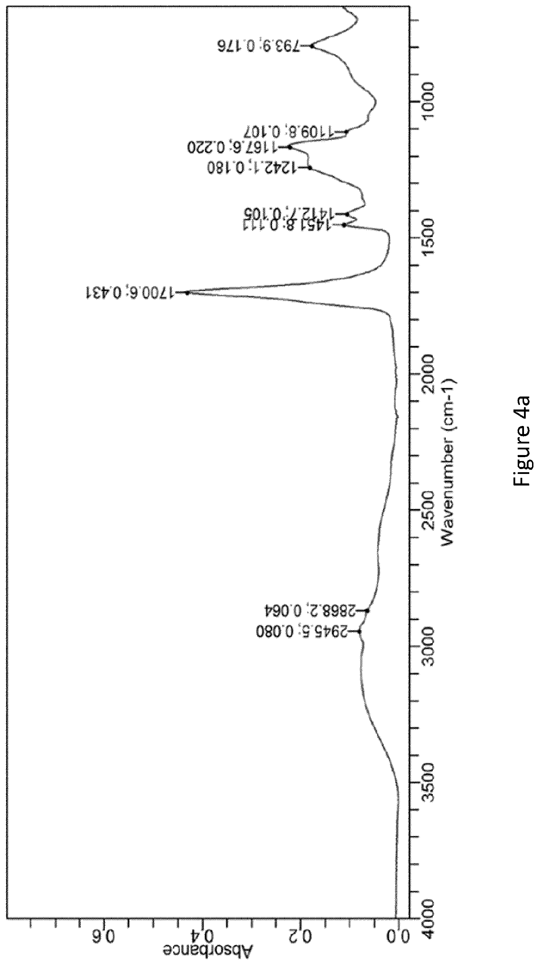

The FTIR spectra of pristine PAA, (Na-pyrophosphate and PAA/(Na-pyrophosphate with different content of Na-pyrophosphate are presented in Figures 4a-4c. Na-pyrophosphate does not have the OH stretching band near 3000 cm⁻¹. It can be seen that the addition of Na-pyrophosphate to PAA resulted in diminishing of the OH peak of PAA, wherein even the lowest concentration (10% wt.) of Na- pyrophosphate had a pronounced effect on the OH peak. Based on this result, it may be assumed that the concentration of the protonated carboxylic groups of PAA decreases as they become deprotonated due to interaction with pyrophosphate via sodium ions, which results in electrostatic crosslinking of the PAA by Na-pyrophosphate.

Additionally, the PAA and Na-pyrophosphate do not have the C(=O)O-peak at all, while this peak clearly appears when PAA is mixed with Na-pyrophosphate, which suggests that the carboxylic groups of the PAA get deprotonated as PAA is mixed with Na-pyrophosphate, and crosslinking takes place between the deprotonated groups and pyrophosphate through sodium ions. It can therefore be understood that the PAA-based binder containing Na-pyrophosphate, according to the various embodiments of the present invention, is a crosslinked binder, wherein PAA is crosslinked by Na-pyrophosphate.

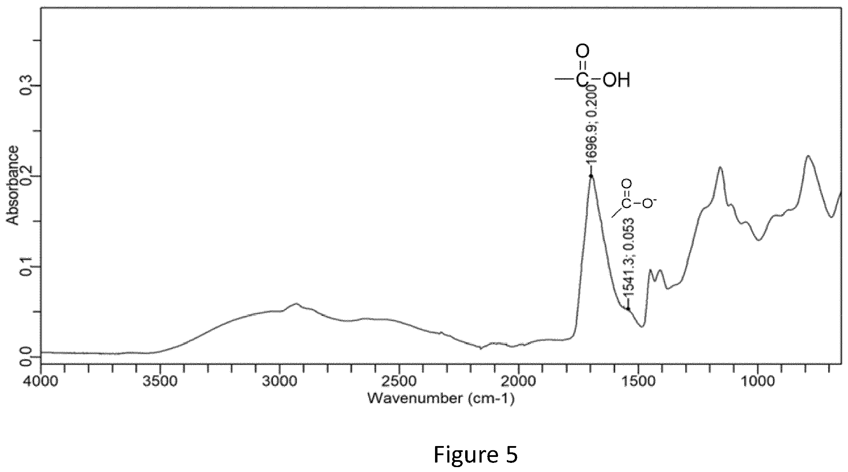

Figure 5 shows a FTIR spectrum of poly(acrylic acid) and 5% wt. tetrasodium-pyrophosphate (PAA/Na-pyrophosphate 5%). Na-pyrophosphate has the protonated carboxyl group (COOH) band near 1700 cm⁻¹. The COOH peak has a relative height of 0.2. Additionally, the anionic carboxyl group (C(=O)O-) band appears near 1541 cm⁻¹. The C(=O)O- band peak has a relative height of 0.053.

As used herein the term mass load may be the weight of the anode material per cm of current collector. The anode material comprises all (solid) materials attached to the current collector, such as, anode active material, binder, additives, etc.

Examples 8 through 11 below have an anode mass load in the range between 2 mg/cm² and 15mg/cm² on a single-sided anode, corresponding to between 4 mg/cm² to 30 mg/cm² of the anode mass load on a double-sided anode. In particular, a double-sided anode mass load between 10 mg/cm² and 22 mg/cm² of mass load may be used. The testing conditions for charge and discharge in Examples 8 through 11 are 25°C, at 0.1C - 2C charge/discharge rate, and charge/discharge between 80% DoD and 100% DoD. The test cells of Examples 8 and 9 may be applicable to both lithium iron phosphate (LFP)/graphite and Nickel Manganese Cobalt (NMC)/graphite battery chemistries.

### Example 8 - Electrochemical characterization: differentiation between anode electrodes with non-crosslinked PAA binder only and those with PAA/Na-EDTA crosslinked binder

Electrodes having the same anode mass load and the same total binder concentration, albeit either with or without Na-EDTA, may be compared to assess the effect of the inclusion of the crosslinker. The double-sided mass load of the anode formulation was 18 mg/cm2 and the total binder weight percentage, based on the total anode mass load, was between 2.0% and 5% weight percentage. The crosslinked binder formulation constituted a 0.1% - 1% weight percentage of Na-EDTA relative to the total weight of the anode mass load (2% - 20% by weight of the total binder composition).

The cycle life performance of the LFP/graphite cells having an anode formulation including PPA with Na-EDTA crosslinker increased by 10 to 70% in comparison to the cells having an anode including non-crosslinked PAA binder, at 0.5C, and 95% DoD of the cells. The cycle life performance of the LFP/graphite cells having an anode formulation including PPA with Na-EDTA crosslinker increased by at least 10% in comparison to the cells having an anode including non-crosslinked PAA binder, at 0.5C, and 95% DoD of the cells.

### Example 9 - Electrochemical characterization: differentiation between anode electrodes with non-crosslinked PAA binder only and those with PAA/pyrophosphate crosslinked binder

Similarly to Example 8 above, electrodes having the same anode mass load and the same total binder concentration in the anode formulation, albeit with or without pyrophosphate, were compared to assess the effect of the inclusion of the crosslinking agent. The total binder weight percentage, based on the total mass load of the anode, was between 2.0% and 5% weight percentage. The crosslinked binder formulation constituted a 0.1% - 1% weight percentage pyrophosphate of the total anode mass load (i.e., 2% - 20% by weight of the total binder composition). The total binder weight percentage, based on the total mass load of the anode, was between 1% and 15% weight percentage. The crosslinked binder formulation constituted a 0.05% - 3% weight percentage pyrophosphate of the total anode mass load (i.e., 2% - 20% by weight of the total binder composition).

The cycle life performance of the LFP/Graphite cells having an anode formulation including PPA with pyrophosphate crosslinking agent increased by 10% to 70% in comparison to the cells without a pyrophosphate crosslinking agent, at 0.5C, and 95% DoD of the cells. The cycle life performance of the LFP/graphite cells having an anode formulation including PPA with pyrophosphate crosslinker increased by at least 10% in comparison to the cells having an anode including non-crosslinked PAA binder, at 0.5C, and 95% DoD of the cells.

### Example 10 - Adhesion characterization: differentiation of anode electrodes with non-crosslinked PAA binder only and those with PAA/Na-EDTA crosslinked binder

To assess whether the improved cycle life performance described above in Example 8 rests upon the degree of adhesion between the anode active material and the current collector, an adhesion test was performed with the anode formulation including non-crosslinked PPA binder only and with the anode formulation including PPA/Na-EDTA crosslinked binder as underlying the anodes of Example 8. Adhesion of the anode mass load to the current collector was tested using a TXA^{™}-Micro-precision by Yeonjin^{®} S-Tech Corporation device under ASTM D3330, and pull force was measured to be greater or equal to 8 gf/cm.

### Example 11 - Adhesion characterization: differentiation of anode electrodes with non-crosslinked PAA binder and those with PAA/pyrophosphate crosslinked binder

Similarly to Example 10 above, an adhesion test was performed with the anode formulation including non-crosslinked PPA binder only and with the anode formulation including PPA/pyrophosphate crosslinked binder as underlying the anodes of Example 9. Adhesion of the anode mass load to the current collector was tested using a TXA^{™}-Micro-precision by Yeonjin^{®} S-Tech Corporation device under ASTM D3330, and pull force was measured to be greater or equal to 8 gf/cm.

The results of the test examples show that the inclusion of Na-EDTA crosslinker in the PPA binder, or the inclusion of pyrophosphate crosslinker in the PPA binder, provides for a significant increase in the peel-off strength compared to that achieved when the anode formulation includes non-crosslinked PPA. Therefore, using the Na-EDTA crosslinker or the pyrophosphate crosslinker in the PPA binder may allow using significantly less binder material in the anode mass load.

The electrical performance of secondary lithium batteries may rely on the adhesion between the anode active material layer and the current collector. The herein disclosed crosslinking of the binder may lead to a consistent increase in strength (such as peel off strength) and adhesion between the anode active material layer and the current collector, thereby preserving the electrode integrity and increasing the cycle life of an electrochemical energy storage device.

While the present invention has been particularly described, persons skilled in the art will appreciate that many variations and modifications can be made. Therefore, the invention is not to be construed as restricted to the particularly described embodiments, and the scope and concept of the invention will be more readily understood by reference to the claims, which follow.

### Clauses

Clause 1. An electrode for an electrochemical energy storage device comprising:
an electrode active material; and
a crosslinked binder,
wherein the crosslinked binder comprises a polyelectrolyte composed of monomer units, wherein at least a portion of the monomer units has at least one carboxyl group per unit, and a polyphosphate, wherein the polyelectrolyte is crosslinked by the polyphosphate, and
wherein the electrode active material is held together by the crosslinked binder.

Clause 2. The electrode according to clause 1, wherein the polyelectrolyte is selected from the group consisting of poly(acrylic acid) (PAA), carboxymethylcellulose (CMC), alginate, xanthan gum, gum Arabic, and any combination thereof.

Clause 3. The electrode according to any one of clauses 1 or 2, wherein the weight ratio between the polyelectrolyte and the polyphosphate ranges from about 100:1 to about 4:1.

Clause 4. The electrode according to any one of clauses 1 to 3, wherein the polyphosphate has a number average molecular weight ranging from about 150 g/mole to about 700 g/mole.

Clause 5. The electrode according to any one of clauses 1 to 4, wherein the polyphosphate is selected from tripolyphosphate, pyrophosphate, and any combination thereof.

Clause 6. The electrode according to clause 5, wherein the polyphosphate is tripolyphosphate.

Clause 7. The electrode according to clause 5, wherein the polyphosphate is pyrophosphate.

Clause 8. The electrode according to any one of clauses 1 to 7, wherein the polyphosphate is present in the electrode in a weight percent ranging from about 0.05 to about 2, based on the total weight of the electrode.

Clause 9. The electrode according to any one of clauses 1 to 8, wherein the crosslinked binder further comprises a cation selected from a monovalent metal cation and an ionic liquid cation.

Clause 10. The electrode according to clause 9, wherein the monovalent metal cation is selected from the group consisting of a sodium ion (Na⁺), lithium ion (Li⁺), potassium ion (K⁺), and any combination thereof.

Clause 11. The electrode according to clause 9, wherein the ionic liquid cation is selected from the group consisting of imidazolium, ammonium, pyridinium, pyrrolidinium, pyridazinium, pyrimidinium, pyrazinium, pyrazolium, piperidinium, thiazolium, 1,2,3-triazolium, 1,2,4-triazolium, oxazolium, isoquinolinium, quinolinium, and any combination thereof.

Clause 12. The electrode according to clause 11, wherein the ionic liquid cation is substituted by at least one of alkyl, ester, acyl, and acetyl.

Clause 13. The electrode according to any one of clauses 1 to 12, wherein the polyelectrolyte is electrostatically crosslinked by the polyphosphate.

Clause 14. The electrode according to any one of clauses 9 to 13, wherein the polyelectrolyte is electrostatically crosslinked by the polyphosphate via the cation.

Clause 15. The electrode according to any one of clauses 9 to 14, wherein the molar ratio between the polyphosphate and the cation ranges from about 5:1 to about 1:5.

Clause 16. The electrode according to any one of clauses 1 to 15, wherein the molar ratio between the at least one carboxyl group of the polyelectrolyte and the polyphosphate ranges from about 30:1 to about 1:1.

Clause 17. The electrode according to any one of clauses 1 to 16, wherein the molar ratio between the at least one carboxyl group of the polyelectrolyte and the cation ranges from about 30:1 to about 1:1.

Clause 18. The electrode according to any one of clauses 1 to 17, wherein the polyelectrolyte is poly(acrylic acid).

Clause 19. The electrode according to any one of clauses 1 to 17, wherein the polyelectrolyte is carboxymethylcellulose.

Clause 20. The electrode according to any one of clauses 1 to 19, wherein the polyelectrolyte has a number average molecular weight ranging from about 50 kDa to about 3000 kDa.

Clause 21. The electrode according to clause 20, wherein the number average molecular weight of the polyelectrolyte ranges from about 300 kDa to about 3000 kDa.

Clause 22. The electrode according to any one of clauses 9 to 21, wherein the cation is sodium.

Clause 23. The electrode according to any one of clauses 9 to 22, wherein the weight ratio between the polyelectrolyte and the cation ranges from about 400:1 to about 15:1.

Clause 24. The electrode according to any one of clauses 1 to 23, wherein the polyelectrolyte is present in the electrode in a weight percent ranging from about 0.5 to about 50, based on the total weight of the electrode.

Clause 25. The electrode according to any one of clauses 1 to 24, wherein the crosslinked binder further comprises a divalent metal cation.

Clause 26. The electrode according to clause 25, wherein the divalent metal cation comprises calcium ion (Ca²⁺).

Clause 27. The electrode according to any one of clauses 25 or 26, wherein the molar ratio between the at least one carboxyl group of the polyelectrolyte and the divalent metal cation ranges from about 300: 1 to about 10:1.

Clause 28. The electrode according to any one of clauses 1 to 27, wherein the electrode active material is selected from a lithium intercalation material and a lithium alloying material.

Clause 29. The electrode according to any one of clauses 1 to 27, wherein the electrode active material is selected from the group consisting of graphite, amorphous carbon, mesoporous carbon, silicon, silicon suboxide, silicon dioxide, carbon-modified silicon-based material, tin, antimony, cobalt, cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and combinations thereof.

Clause 30. The electrode according to clause 29, wherein the electrode active material is graphite.

Clause 31. The electrode according to any one of clauses 1 to 30, wherein the electrode active material is present in the electrode in a weight percent ranging from about 50 to about 99.5, based on the total weight of the electrode.

Clause 32. The electrode according to any one of clauses 1 to 31, further comprising a conductive additive.

Clause 33. The electrode according to clause 32, wherein the conductive additive is selected from an electronically conducting material, ionically conducting material, and a combination thereof.

Clause 34. The electrode according to clause 33, wherein the electronically conducting material is selected from the group consisting of carbon black, graphite, graphene, reduced graphene oxide, carbon nanotubes, fullerenes, carbon fibers, and any combination thereof.

Clause 35. The electrode according to clause 33, wherein the ionically conducting material is a Li-ion conducting material selected from the group consisting of lithium imide (Li₃N), lithium oxide (Li₂O), lithium sulfate (Li₂SO₄), lithium fluoride (LiF), lithium phosphate (Li₃PO₄), lithium carbonate (Li₂CO₃), aluminum oxide (Al₂O₃), zinc oxide (ZnO), titanium oxide (TiO), hafnium oxide (HfO) and combinations thereof.

Clause 36. The electrode according to any one of clauses 32 to 35, wherein the conductive additive is present in the electrode in a weight percent ranging from about 0.25 to about 25, based on the total weight of the electrode.

Clause 37. The electrode according to any one of clauses 32 to 36, comprising from about 50 to about 99.5 %wt. of the electrode active material, from about 0.5 to about 10 %wt. of the polyelectrolyte, from about 0.05 to about 10 %wt. of the polyphosphate, and from about 0.2 to about 25 %wt. of the conductive additive.

Clause 38. A secondary lithium battery comprising:
a case, a positive terminal, a cathode, a separator, an electrolyte, a negative terminal, and an anode, wherein at least one of the cathode and the anode comprises an electrode active material and a crosslinked binder, wherein the crosslinked binder comprises a polyelectrolyte composed of monomer units,
wherein at least a portion of the monomer units has at least one carboxyl group per unit, and a polyphosphate, wherein the polyelectrolyte is crosslinked by the polyphosphate, and wherein the electrode active material is held together by the crosslinked binder.

Clause 39. The secondary lithium battery according to clause 38, wherein the polyelectrolyte is selected from the group consisting of poly(acrylic acid), carboxymethylcellulose, alginate, xanthan gum, gum Arabic, and any combination thereof.

Clause 40. The secondary lithium battery according to any one of clauses 38 or 39, wherein the polyphosphate is selected from tripolyphosphate, pyrophosphate, and any combination thereof.

Clause 41. The secondary lithium battery according to any one of clauses 38 to 40, wherein the electrode active material is an anode active material selected from the group consisting of graphite, amorphous carbon, mesoporous carbon, silicon, silicon suboxide, silicon dioxide, carbon-modified silicon-based material, tin, antimony, cobalt, and any combination thereof or a cathode active material selected from the group consisting of cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and combinations thereof.

Clause 42. A method of forming the electrode according to any one of clauses 1 to 37, the method comprising heating a mixture comprising the crosslinked binder and the electrode active material to a predefined temperature and/or applying a pressure to the mixture.

Clause 43. The method according to clause 42, wherein the mixture is obtained by:
mixing the electrode active material and the polyelectrolyte with one or more solvents that dissolve or disperse the polyelectrolyte; and
adding the polyphosphate to the mixture of the electrode active material and the polyelectrolyte.

Clause 44. The method according to clause 43, wherein the polyphosphate is added in a dry form.

Clause 45. The method according to clause 43, wherein the polyphosphate is added as a solution comprising the polyphosphate.

Clause 46. The method according to clause 42, wherein the mixture is obtained by mixing the electrode active material, the polyelectrolyte, and the polyphosphate with one or more solvents that dissolve or disperse the polyelectrolyte and the polyphosphate.

Clause 47. The method according to clause 42, wherein the mixture is obtained by:
mixing the polyelectrolyte and the polyphosphate in one or more solvents that dissolve or disperse the polyelectrolyte and the polyphosphate; and
mixing an obtained mixture with the electrode active material.

Clause 48. The method according to any one of clauses 42 to 47, wherein the mixture further comprises a conductive material.

Clause 49. The method according to clause 48, wherein the mixture is obtained by:
mixing the conductive material and the polyelectrolyte with one or more solvents that dissolve or disperse the polyelectrolyte;
adding the electrode active material to the mixture of the conductive material and the polyelectrolyte; and
adding the polyphosphate to the mixture of the conductive material, the polyelectrolyte, and the electrode active material.

Clause 50. The method according to any one of clauses 42 to 49, wherein the polyphosphate is in a form of a salt comprising a cation selected from a monovalent metal cation and an ionic liquid cation.

Clause 51. The method according to clause 50, wherein the polyphosphate is selected from the group consisting of sodium tripolyphosphate, sodium pyrophosphate, sodium hexametaphosphate, and any combination thereof.

Clause 52. The method according to any one of clauses 42 to 51, wherein the mixture further comprises calcium phosphate.

Clause 53. The method according to any one of clauses 42 to 52, comprising applying the mixture to a current collector prior to the heating and/or applying the pressure.

Clause 54. The method according to any one of clauses 42 to 53, wherein applying the pressure is performed prior to heating.

Clause 55. The method according to any one of clauses 42 to 53, wherein heating comprises drying the mixture at a temperature that is at least about 10°C lower than the glass transition temperature of the polyelectrolyte and curing the mixture at a temperature that is at least about 2°C higher than the glass transition temperature of the polyelectrolyte.

Clause 56. The method according to clause 55, wherein applying the pressure is performed following drying and prior to curing.

Clause 57. The method according to any one of clauses 42 to 56, wherein the polyelectrolyte is poly(acrylic acid) and heating comprises drying the obtained mixture at a temperature ranging from about 60°C to about 100°C and curing at a temperature ranging from about 90°C to about 130°C.

Clause 58. An electrode slurry composition comprising:
an electrode active material;
a crosslinked binder, wherein the crosslinked binder comprises a polyelectrolyte composed of monomer units, wherein at least a portion of the monomer units has at least one carboxyl group per unit, and a polyphosphate; and one or more solvents.

Clause 59. The electrode slurry composition according to clause 58, wherein the polyelectrolyte is selected from the group consisting of poly(acrylic acid), carboxymethylcellulose, alginate, xanthan gum, gum Arabic, and any combination thereof.

Clause 60. The electrode slurry composition according to any one of clauses 58 or 59, wherein the polyphosphate is selected from tripolyphosphate, pyrophosphate, and any combination thereof.

Clause 61. The electrode slurry composition according to any one of clauses 58 to 60, wherein the electrode active material is selected from the group consisting of graphite, amorphous carbon, mesoporous carbon, silicon, silicon suboxide, silicon dioxide, carbon-modified silicon-based material, tin, antimony, cobalt, cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and combinations thereof.

Clause 62. The electrode slurry composition according to any one of clauses 58 to 61, wherein the one or more solvents comprise water or an aqueous buffer.

Clause 63. The electrode slurry composition according to any one of clauses 58 to 62, comprising from about 35 to about 75 %wt. of solids comprising the electrode active material and the crosslinked binder, and from about 25 to about 65 %wt. water or the aqueous buffer.

Clause 64. The electrode slurry composition according to any one of clauses 58 to 63, further comprising a cation selected from a monovalent metal cation and an ionic liquid cation.

Clause 65. The electrode slurry composition according to clause 64, wherein the monovalent metal cation is selected from the group consisting of a sodium ion (Na⁺), lithium ion (Li⁺), potassium ion (K⁺), and any combination thereof.

Clause 66. The electrode slurry composition according to clause 64, wherein the ionic liquid cation is selected from the group consisting of imidazolium, ammonium, pyridinium, pyrrolidinium, pyridazinium, pyrimidinium, pyrazinium, pyrazolium, piperidinium, thiazolium, 1,2,3-triazolium, 1,2,4-triazolium, oxazolium, isoquinolinium, quinolinium, and any combination thereof, optionally, wherein the ionic liquid cation is substituted by at least one of alkyl, ester, acyl, and acetyl.

Clause 67. The electrode slurry composition according to any one of clauses 63 to 66, wherein the polyphosphate is present in a form of a dissolved salt comprising said cation.

Clause 68. The electrode slurry composition according to any one of clauses 58 to 67, further comprising a divalent metal cation.

Clause 69. The electrode slurry composition according to clause 68, wherein the divalent metal cation comprises a calcium ion.

Clause 70. The electrode slurry composition according to any one of clauses 58 to 69, further comprising a conductive additive.

Clause 71. The electrode slurry composition according to clause 70, comprising from about 30 to about 75 %wt. of the electrode active material, from about 0.175 to about 7.5 %wt. of the polyelectrolyte, from about 0.02 to about 1 %wt. of the polyphosphate, and from about 0.1 to 5 %wt. of the conductive additive.

Clause 72. An electrode for an electrochemical energy storage device comprising:
an electrode active material; and
a crosslinked binder,
wherein the crosslinked binder comprises a polyelectrolyte composed of monomer units, wherein at least a portion of the monomer units has at least one carboxyl group per unit, ethylenedinitrilotetraacetic acid (EDTA) and sodium ions (Na⁺), wherein the polyelectrolyte is crosslinked by EDTA and sodium ions, and wherein the electrode active material is held together by the crosslinked binder.

Clause 73. The electrode according to clause 72, wherein the polyelectrolyte is selected from the group consisting of poly(acrylic acid), carboxymethylcellulose, alginate, xanthan gum, gum Arabic, and any combination thereof.

Clause 74. The electrode according to any one of clauses 72 or 73, wherein the molar ratio between EDTA and sodium ions ranges from about 5:1 to about 1:5.

Clause 75. The electrode according to clause 74, wherein the molar ratio between EDTA and sodium ions is lower than 1.

Clause 76. The electrode according to any one of clauses 72 to 75, wherein the weight ratio between the polyelectrolyte and EDTA ranges from about 5:1 to about 15:1.

Clause 77. The electrode according to clause 76, wherein the weight ratio between the polyelectrolyte and EDTA is about 9:1.

Clause 78. The electrode according to any one of clauses 72 to 77, wherein the weight ratio between the polyelectrolyte and sodium ions ranges from about 200:1 to about 50:1.

Clause 79. The electrode according to any one of clauses 72 to 78, wherein EDTA is present in the electrode in a weight percent ranging from about 0.05 to about 10%, based on the total weight of the electrode.

Clause 80. The electrode according to any one of clauses 72 to 79, wherein the polyelectrolyte is poly(acrylic acid).

Clause 81. The electrode according to any one of clauses 72 to 79, wherein the polyelectrolyte is carboxymethylcellulose.

Clause 82. The electrode according to any one of clauses 72 to 81, wherein the polyelectrolyte has a number average molecular weight ranging from about 50 kDa to about 3000 kDa.

Clause 83a. The electrode according to clause 82, wherein the number average molecular weight of the polyelectrolyte ranges from about 300 kDa to about 600 kDa.

Clause 83b. The electrode according to clause 82, wherein the number average molecular weight of the polyelectrolyte ranges from about 300 kDa to about 3000 kDa.

Clause 84. The electrode according to any one of clauses 72 to 83, wherein the polyelectrolyte is present in the electrode in a weight percent ranging from about 0.5 to about 50, based on the total weight of the electrode.

Clause 85. The electrode according to any one of clauses 72 to 84, wherein the polyelectrolyte is electrostatically crosslinked by EDTA via sodium ions.

Clause 86. The electrode according to any one of clauses 72 to 85, wherein the crosslinked binder further comprises cations selected from monovalent metal cations other than sodium ions and ionic liquid cations.

Clause 87. The electrode according to clause 86, wherein the monovalent metal cations are selected from lithium ions (Li⁺), potassium ions (K⁺), and a combination thereof.

Clause 88. The electrode according to clause 86, wherein the ionic liquid cations are selected from the group consisting of imidazolium, ammonium, pyridinium, pyrrolidinium, pyridazinium, pyrimidinium, pyrazinium, pyrazolium, piperidinium, thiazolium, 1,2,3-triazolium, 1,2,4-triazolium, oxazolium, isoquinolinium, quinolinium, and any combination thereof.

Clause 89. The electrode according to clause 88, wherein the ionic liquid cations are substituted by at least one of alkyl, ester, acyl, and acetyl.

Clause 90. The electrode according to any one of clauses 72 to 89, wherein the molar ratio between sodium ions and the cations ranges from about 100:1 to about 1:5.

Clause 91. The electrode according to any one of clauses 72 to 90, wherein the crosslinked binder further comprises divalent metal cations.

Clause 92. The electrode according to clause 72, wherein the divalent metal cations comprise calcium ions (Ca²⁺).

Clause 93. The electrode according to any one of clauses 91 or 92, wherein the molar ratio between sodium ions and the divalent metal cation ranges from about 100:1 to about 10:1.

Clause 94. The electrode according to any one of clauses 72 to 93, wherein the crosslinked binder further comprises phosphate anions.

Clause 95. The electrode according to any one of clauses 72 to 94, wherein the electrode active material is selected from a lithium intercalation material and a lithium alloying material.

Clause 96. The electrode according to any one of clauses 72 to 95, wherein the electrode active material is selected from the group consisting of graphite, amorphous carbon, mesoporous carbon, silicon, silicon suboxide, silicon dioxide, carbon-modified silicon-based material, tin, antimony, cobalt, cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and combinations thereof.

Clause 97. The electrode according to clause 96, wherein the electrode active material is graphite.

Clause 98. The electrode according to any one of clauses 72 to 97, wherein the electrode active material is present in the electrode in a weight percent ranging from about 50 to about 99.5 out of the total weight of the electrode.

Clause 99. The electrode according to any one of clauses 72 to 98, further comprising a conductive additive.

Clause 100. The electrode according to clause 99, wherein the conductive additive is selected from an electronically conducting material, ionically conducting material, and a combination thereof.

Clause 101. The electrode according to clause 100, wherein the electronically conducting material is selected from the group consisting of carbon black, graphite, graphene, reduced graphene oxide, carbon nanotubes, fullerenes, carbon fibers, and any combination thereof.

Clause 102. The electrode according to clause 100, wherein the ionically conducting material is a Li-ion conducting material selected from the group consisting of lithium imide (Li₃N), lithium oxide (Li₂O), lithium sulfate (Li₂SO₄), lithium fluoride (LiF), lithium phosphate (Li₃PO₄), lithium carbonate (Li₂CO₃), aluminum oxide (Al₂O₃), zinc oxide (ZnO), titanium oxide (TiO), hafnium oxide (HfO) and combinations thereof.

Clause 103. The electrode according to any one of clauses 99 to 102, wherein the conductive additive is present in the electrode in a weight percent ranging from about 0.05 to about 25, based on the total weight of the electrode.

Clause 104. The electrode according to any one of clauses 99 to 103, comprising from about 50 to about 99.5 %wt. of the electrode active material, from about 0.5 to about 50 %wt. of the polyelectrolyte, from about 0.05 to about 10 %wt. of Na-EDTA, and from about 0.2 to about 25 %wt. of the conductive additive.

Clause 105. A secondary lithium battery comprising:
a case, a positive terminal, a cathode, a separator, an electrolyte, a negative terminal and an anode, wherein at least one of the cathode and the anode comprises an electrode active material and a crosslinked binder, wherein the crosslinked binder comprises a polyelectrolyte composed of monomer units,
wherein at least a portion of the monomer units has at least one carboxyl group per unit, EDTA and sodium ions, wherein the polyelectrolyte is crosslinked by EDTA and sodium ions, and wherein the electrode active material is held together by the crosslinked binder.

Clause 106. The secondary lithium battery according to clause 105, wherein the polyelectrolyte is selected from the group consisting of poly(acrylic acid), carboxymethylcellulose, alginate, xanthan gum, gum Arabic, and any combination thereof.

Clause 107. The secondary lithium battery according to any one of clauses 105 or 106, wherein the electrode active material is an anode active material selected from the group consisting of graphite, amorphous carbon, mesoporous carbon, silicon, silicon suboxide, silicon dioxide, carbon-modified silicon-based material, tin, antimony, cobalt, and any combination thereof or a cathode active material selected from the group consisting of cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and any combination thereof.

Clause 108. A method of forming the electrode according to any one of clauses 1 to 107, the method comprising heating a mixture comprising the crosslinked binder and the electrode active material to a predefined temperature and/or applying a pressure to the mixture.

Clause 109. The method according to clause 108, wherein the mixture is obtained by:
mixing the electrode active material and the polyelectrolyte with one or more solvents that dissolve or disperse the polyelectrolyte; and
adding a sodium salt of EDTA (Na-EDTA) to the mixture of the electrode active material and the polyelectrolyte.

Clause 110. The method according to clause 109, wherein Na-EDTA is added in a dry form.

Clause 111. The method according to clause 109, wherein Na-EDTA is added in a form of a solution.

Clause 112. The method according to clause 108, wherein the mixture is obtained by:
mixing the polyelectrolyte and Na-EDTA in one or more solvents that dissolve or disperse the polyelectrolyte and Na-EDTA; and
mixing an obtained mixture with the electrode active material.

Clause 113. The method according to clause 108, wherein the mixture is obtained by mixing the electrode active material, the polyelectrolyte, and Na-EDTA with one or more solvents that dissolve or disperse the polyelectrolyte and Na-EDTA.

Clause 114. The method according to any one of clauses 109 to 113, wherein the polyelectrolyte and Na-EDTA are mixed at a weight ratio ranging from about 5:1 to about 15:1.

Clause 115. The method according to clause 108, wherein the mixture is obtained by:
mixing the electrode active material and the polyelectrolyte with one or more solvents that dissolve or disperse the polyelectrolyte; and
adding EDTA and a sodium salt to the mixture of the electrode active material and the polyelectrolyte.

Clause 116. The method according to clause 115, wherein EDTA, the sodium salt or both are added in a dry form.

Clause 117. The method according to clause 115, wherein EDTA, the sodium salt or both are added in a dissolved form.

Clause 118. The method according to clause 108, wherein the mixture is obtained by:
mixing the polyelectrolyte, EDTA and a sodium salt in one or more solvents that dissolve or disperse the polyelectrolyte, EDTA, and the sodium salt; and
mixing an obtained mixture with the electrode active material.

Clause 119. The method according to clause 108, wherein the mixture is obtained by mixing the electrode active material, the polyelectrolyte, EDTA, and a sodium salt with one or more solvents that dissolve or disperse the polyelectrolyte, EDTA, and the sodium salt.

Clause 120. The method according to any one of clauses 115 to 119, wherein the polyelectrolyte and EDTA are mixed at a weight ratio ranging from about 5:1 to about 15:1.

Clause 121. The method according to any one of clauses 115 to 119, wherein the sodium salt and EDTA are mixed at a molar ratio ranging from about 5:1 to about 1:5.

Clause 122. The method according to clause 108, wherein the mixture is obtained by:
mixing the electrode active material and the polyelectrolyte with one or more solvents that dissolve or disperse the polyelectrolyte; and
adding Na-EDTA and an additional sodium salt to the mixture of the electrode active material and the polyelectrolyte.

Clause 123. The method according to clause 122, wherein Na-EDTA, the additional sodium salt, or both, are added in a dry form.

Clause 124. The method according to clause 122, wherein Na-EDTA, the additional sodium salt, or both, are added in a dissolved form.

Clause 125. The method according to clause 108, wherein the mixture is obtained by:
mixing the polyelectrolyte, Na-EDTA, and the additional sodium salt in one or more solvents that dissolve Na-EDTA and the additional sodium salt; and
mixing an obtained mixture with the electrode active material.

Clause 126. The method according to clause 108, wherein the mixture is obtained by mixing the electrode active material, the polyelectrolyte, Na-EDTA, and the additional sodium salt with one or more solvents that dissolve Na-EDTA, and the additional sodium salt.

Clause 127. The method according to any one of clauses 122 to 126, wherein the polyelectrolyte and Na-EDTA are mixed at a weight ratio ranging from about 5:1 to about 15:1.

Clause 128. The method according to any one of clauses 122 to127, wherein the Na-EDTA and the additional sodium salt are mixed at a molar ratio ranging from about 100:1 to about 2:1.

Clause 129. The method according to any one of clauses 115 to 128, wherein the sodium salt, the additional sodium salt, or both, comprise sodium phosphate.

Clause 130. The method according to any one of clauses 115 to 129, wherein the mixture further comprises a conductive material.

Clause 131. The method according to clause 121, wherein the mixture is obtained by:
mixing the conductive material and the polyelectrolyte with one or more solvents that disperse the polyelectrolyte;
adding the electrode active material to the mixture of the conductive material and the polyelectrolyte; and
adding Na-EDTA, and optionally, the additional sodium salt, to the mixture of the conductive material, the polyelectrolyte, and the electrode active material.

Clause 132. The method according to any one of clauses 108 to 131, comprising applying the mixture to a current collector prior to heating and/or applying the pressure.

Clause 133. The method according to any one of clauses 108 to 132, wherein applying the pressure is performed prior to heating.

Clause 134. The method according to any one of clauses 108 to 132, wherein heating comprises drying at a temperature that is at least about 10°C lower than a glass transition temperature of the polyelectrolyte and curing at a temperature that is at least about 2°C higher than the glass transition temperature of the polyelectrolyte.

Clause 135. The method according to clause 134, wherein applying the pressure is performed following drying and prior to curing.

Clause 136. The method according to any one of clauses 108 to 135, wherein the polyelectrolyte is poly(acrylic acid) and heating comprises drying the obtained mixture at a temperature ranging from about 60°C to about 100°C and curing at a temperature ranging from about 90°C to about 130°C.

Clause 137. An electrode slurry composition comprising:
an electrode active material;
a crosslinked binder, wherein the crosslinked binder comprises a polyelectrolyte composed of monomer units, wherein at least a portion of the monomer units has at least one carboxyl group per unit, EDTA and sodium ions; and
one or more solvents.

Clause 138. The electrode slurry composition according to clause 137, wherein the polyelectrolyte is selected from the group consisting of poly(acrylic acid), carboxymethylcellulose, alginate, xanthan gum, gum Arabic, and any combination thereof.

Clause 139. The electrode slurry composition according to clause 138, wherein the polyelectrolyte is poly(acrylic acid).

Clause 140. The electrode slurry composition according to any one of clauses 137 to 139, wherein the electrode active material is selected from the group consisting of graphite, amorphous carbon, mesoporous carbon, silicon, silicon suboxide, silicon dioxide, carbon-modified silicon-based material, tin, antimony, cobalt, cobalt oxide, iron oxide, lithium nickel manganese cobalt oxide, lithium iron phosphate, lithium iron manganese phosphate, lithium nickel manganese oxide, lithium manganese oxide, lithium cobalt oxide, lithium nickel cobalt aluminum oxide, lithium cobalt aluminum oxide, sulfur, lithium sulfide, iron fluoride, copper fluoride, and any combination thereof.

Clause 141. The electrode slurry composition according to any one of clauses 137 to 140, wherein the one or more solvents comprise water or an aqueous buffer.

Clause 142. The electrode slurry composition according to any one of clauses 137 to 141, comprising from about 35 to about 75 %wt. of solids comprising the electrode active material and the crosslinked binder, and from about 25 to about 65 %wt. water or buffer.

Clause 143. The electrode slurry composition according to any one of clauses 137 to 142, wherein the molar ratio between EDTA and sodium ions is lower than 1.

Clause 144. The electrode slurry composition according to any one of clauses 137 to 143, wherein EDTA is present in a form of a dissolved sodium salt.

Clause 145. The electrode slurry composition according to any one of clauses 137 to 144, further comprising an additional sodium salt comprising sodium phosphate.

Clause 146. The electrode slurry composition according to any one of clauses 137 to 145, further comprising divalent metal cations.

Clause 147. The electrode slurry composition according to clause 146, wherein the divalent metal cations comprise calcium ions.

Clause 148. The electrode slurry composition according to any one of clauses 137 to 147, further comprising a conductive additive.

Clause 149. The electrode slurry composition according to clause 148, comprising from about 30 to about 75 %wt. of the electrode active material, from about 0.175 to about 7.5 %wt. of the polyelectrolyte, from about 0.02 to about 1 %wt. of Na-EDTA, and from about 0.1 to 5 %wt. of the conductive additive.

## Claims

1. An electrode for an electrochemical energy storage device comprising:
an electrode active material; and
a crosslinked binder,
wherein the crosslinked binder comprises a polyelectrolyte composed of monomer units,
wherein at least a portion of the monomer units has at least one carboxyl group per unit, and a polyphosphate, wherein the polyelectrolyte is crosslinked by the polyphosphate, and
wherein the electrode active material is held together by the crosslinked binder.

2. The electrode according to claim 1, wherein the polyelectrolyte is selected from the group consisting of poly(acrylic acid) (PAA), carboxymethylcellulose (CMC), alginate, xanthan gum, gum Arabic, and any combination thereof.

3. The electrode according to any one of claims 1 or 2, wherein the polyphosphate is selected from tripolyphosphate, pyrophosphate, and any combination thereof.

4. The electrode according to any one of claims 1 to 3, wherein the weight ratio between the polyelectrolyte and the polyphosphate ranges from about 100:1 to about 4:1.

5. The electrode according to any one of claims 1 to 4, wherein the crosslinked binder further comprises a cation selected from the group consisting of a sodium ion, lithium ion, potassium ion, imidazolium, ammonium, pyridinium, pyrrolidinium, pyridazinium, pyrimidinium, pyrazinium, pyrazolium, piperidinium, thiazolium, 1,2,3-triazolium, 1,2,4-triazolium, oxazolium, isoquinolinium, quinolinium, and any combination thereof.

6. The electrode according to claim 5, wherein the polyelectrolyte is electrostatically crosslinked by the polyphosphate via the cation.

7. The electrode according to claim 5, wherein the molar ratio between the polyphosphate and the cation ranges from about 5:1 to about 1:5; the molar ratio between the at least one carboxyl group of the polyelectrolyte and the polyphosphate ranges from about 30:1 to about 1:1; and/or the molar ratio between the at least one carboxyl group of the polyelectrolyte and the cation ranges from about 30:1 to about 1:1.

8. The electrode according to claim 1 wherein the crosslinked binder further comprises a divalent metal cation comprising calcium ion.

9. The electrode according to any one of claims 1 to 7, wherein the polyelectrolyte is poly(acrylic acid); and/or wherein the electrode active material is graphite.

10. The electrode according to claim 1, comprising from about 50 to about 99.5 %wt. of the electrode active material, from about 0.5 to about 10 %wt. of the polyelectrolyte, from about 0.05 to about 10 %wt. of the polyphosphate, and from about 0.2 to about 25 %wt. of a conductive additive.

11. A secondary lithium battery comprising a case, a positive terminal, a cathode, a separator, an electrolyte, a negative terminal, and an anode, wherein at least one of the cathode and the anode comprises the electrode according to any one of claims 1 to 10.

12. A method of forming the electrode according to any one of claims 1 to 10, the method comprising heating a mixture comprising the crosslinked binder and the electrode active material to a predefined temperature and/or applying a pressure to the mixture.

13. The method according to claim 12, wherein the mixture is obtained by:
a. mixing the electrode active material and the polyelectrolyte with one or more solvents that dissolve or disperse the polyelectrolyte; and
b. adding the polyphosphate to the mixture of the electrode active material and the polyelectrolyte.

14. The method according to claim 13, wherein the polyphosphate is added in a dry form or wherein the polyphosphate is added as a solution comprising the polyphosphate.

15. The method according to claim 12, wherein the mixture is obtained by:
mixing the electrode active material, the polyelectrolyte, and the polyphosphate with one or more solvents that dissolve or disperse the polyelectrolyte and the polyphosphate; or
mixing the polyelectrolyte and the polyphosphate in one or more solvents that dissolve or disperse the polyelectrolyte and the polyphosphate; and mixing the obtained mixture with the electrode active material.
